# FASCICULE DE BREVET EUROPEEN

(11) **EP 0 714 732 B1**
(45) Date de publication et mention de la délivrance du brevet: **06.09.2000**
(21) Numéro de dépôt: 95402694.4
(22) Date de dépôt: 29.11.1995
(51) Int. Cl.: B24B 33/10, B24B 41/06, B23Q 3/06

(54) **Dispositif de prise d'une pièce telle qu'un pignon pendant une opération de rodage d'un alésage de celle-ci**
Aufnahmeverfahren eines Werkstücks sowie ein Zahnrad während eines Honvorgangs dessen Bohrung
Device for holding a workpiece like a gear wheel during the honing operation of his bore

(30) Priorité: 30.11.1994 FR 9414372
(43) Date de publication de la demande: 05.06.1996
(73) Titulaire: AUTOMOBILES PEUGEOT, 75116 Paris (FR); AUTOMOBILES CITROEN, 92200 Neuilly-sur-Seine (FR)
(72) Inventeur: Grand, Jean-Pierre, F-78120 Rambouillet (FR); Richon, Jennick, F-57640 Rugy (FR)
(74) Mandataire: Martin, Jean-Jacques

(56) Documents cités:
- EP-A- 0 478 823
- DE-A- 2 903 622

## Description

La présente invention concerne un dispositif de prise d'une pièce plate, telle qu'un pignon, pendant une opération de rodage d'un alésage de celle-ci selon un axe déterminé de rodage, le dispositif étant destiné à maintenir la pièce dans une position telle qu'un axe de l'alésage coïncide au moins approximativement avec l'axe de rodage et comprenant à cet effet :
- un support présentant un axe longitudinal destiné à coïncider au moins approximativement avec l'axe de rodage, une première face transversale d'appui longitudinal pour la pièce, dans une position dans laquelle l'axe de son alésage coïncide au moins approximativement avec l'axe longitudinal, et un trou longitudinal de passage d'un outil de rodage, débouchant dans la première face d'appui suivant l'axe longitudinal,
- des moyens de plaquage longitudinal de la pièce contre la première face d'appui, dans ladite position, ces moyens de plaquage présentant longitudinalement en regard de la première face d'appui une deuxième face transversale d'appui longitudinal contre la pièce et longitudinalement en regard du trou du support un passage pour l'outil de rodage, débouchant dans la deuxième face d'appui suivant l'axe longitudinal, et étant mobiles longitudinalement, de façon commandée, par rapport au support dans le sens d'un rapprochement vis-à-vis de la première face d'appui, pour plaquer longitudinalement la pièce contre celle-ci et l'immobiliser par rapport au support dans ladite position, ou dans le sens d'un éloignement vis-à-vis de la première face d'appui, pour libérer la pièce.

Dans un mode de réalisation actuellement connu d'un tel dispositif, le support présente la forme d'un C, comportant une branche supérieure et une branche inférieure, sécantes de l'axe longitudinal et reliées mutuellement par un montant latéral par rapport à cet axe, et la pièce telle qu'un pignon est appliquée de bas en haut sur la branche supérieure, par des moyens de plaquage montés sur la branche inférieure.

Le support, qui se trouve ainsi soumis à des efforts tendant à écarter mutuellement sa branche supérieure et sa branche inférieure, retenues d'un seul côté de l'axe longitudinal par le montant latéral, tend à se déformer par ouverture de sa forme en C si bien que la première face d'appui n'est plus perpendiculaire ni à l'axe longitudinal ni à l'axe de rodage et que la pièce est mal positionnée pendant son rodage dont le résultat est par conséquent défectueux.

On connaît également, par DE-A-29 03 622, un mode de réalisation du dispositif précité, dans lequel le support présente la forme d'une plaque symétrique par rapport à un plan déterminé incluant son axe longitudinal. La plaque est percée d'un logement pour la pièce à roder, en pratique un pignon, et cette pièce est plaquée contre la face d'appui, aménagée au fond de son logement, par des brides également montées sur la plaque.

Les efforts auxquels la pièce et, par conséquent, la plaque sont soumises au cours du rodage tendent à infléchir la plaque mais, du fait de la symétrie de celle-ci, la première face d'appui tend à conserver sa perpendicularité vis-à-vis de l'axe de rodage, si bien que la pièce tend à rester correctement positionnée pendant son rodage. Toutefois, les conditions de montage de la plaque, avec possibilité de débattement perpendiculairement à l'axe de rodage, dans un corps porteur quant à lui fixe dans toute direction perpendiculaire à l'axe de rodage peuvent encore amener une certaine dissymétrie dans l'infléchissement de la plaque et par conséquent un certain défaut de positionnement de la pièce pendant son rodage.

En outre, le dispositif décrit dans DE-A-29 03 622 présente un inconvénient important en ce que la plaque faisant office de support de pièces à roder, à savoir de pignons, n'est propre à recevoir et retenir qu'un type de pignon, de dimensions parfaitement déterminées.

Enfin, on connaît par EP-A-0478 823, qui sert de base au préambule de la revendication 1, un dispositif de prise d'une pièce plate telle qu'un pignon, pendant une opération de rodage d'un alésage de celle-ci selon un axe déterminé de rodage, le dispositif étant destiné à maintenir la pièce dans une position telle qu'un axe de l'alésage coïncide au moins approximativement avec l'axe de rodage et comprenant à cet effet :
- un support présentant un axe longitudinal destiné à coïncider au moins approximativement avec l'axe de rodage et un trou longitudinal de passage d'un outil de rodage, disposé suivant l'axe longitudinal, ce support présentant une structure symétrique par rapport à un plan déterminé incluant l'axe longitudinal , lequel support définit une cage qui, lorsqu'elle est vue suivant une direction transversale dudit plan déterminé, est fermée et symétrique par rapport à ce plan, alors qu'elle est ouverte de part en part suivant ladite direction transversale,
- des moyens pour tenir la pièce dans la cage.

Dans ce dispositif connu, la nature des moyens pour tenir la pièce dans la cage n'est pas précisée, si ce n'est quant au fait qu'ils peuvent recevoir la pièce de façon pendulaire, flottante ou rigide et, si l'on se réfère aux figures, quant au fait qu'ils sont portés par les parties longitudinales de la cage, disposées latéralement de part et d'autre de l'axe de rodage.

Le but de la présente invention est de remédier aux inconvénients des dispositifs connus précités et, à cet effet, la présente invention propose un dispositif du type décrit dans EP-A-0478 823, et caractérisé en ce que : - le support présente une première face transversale d'appui longitudinal dans un sens déterminé pour la pièce, dans une position dans laquelle l'axe de son alésage coïncide au moins approximativement avec l'axe longitudinal, le trou longitudinal de passage d'un outil de rodage débouchant dans la première face d'appui, ladite première face d'appui étant solidaire d'une partie transversale de la cage ou d'un moyen susceptible de prendre appui dans ledit sens longitudinal contre une partie transversale de la cage,
- les moyens pour tenir la pièce présentent des moyens de plaquage longitudinal de la pièce dans ledit sens longitudinal contre la première face d'appui, dans ladite position, ces moyens de plaquage présentant longitudinalement en regard de la première face d'appui une deuxième face transversale d'appui longitudinal contre la pièce et longitudinalement en regard du trou du support un trou longitudinal de passage de l'outil de rodage, débouchant dans la deuxième face d'appui suivant l'axe longitudinal, et étant mobiles longitudinalement, de façon commandée, par rapport au support dans le sens d'un rapprochement vis-à-vis de la première face d'appui, pour plaquer longitudinalement la pièce contre celle-ci et l'immobiliser par rapport au support dans ladite position, ou dans le sens d'un éloignement vis-à-vis de la première face d'appui, pour libérer la pièce ,
- la première face d'appui et les moyens de plaquage sont mutuellement opposés longitudinalement.

Un homme du métier comprendra aisément que la structure fermée et symétrique du dispositif selon l'invention permet d'éviter qu'une éventuelle tendance du support à se déformer en conséquence des efforts d'action et de réaction auxquels il est soumis par les moyens de plaquage, par l'intermédiaire de la pièce, se traduise par une perte de la perpendicularité de la surface d'appui par rapport à l'axe de rodage. Les déformations éventuelles ne peuvent en effet se traduire que par un déplacement de la face d'appui, et avec elle de la pièce, suivant l'axe de rodage, sans changement d'orientation et par conséquent sans conséquence sur la qualité du rodage effectué.

Un Homme du métier comprendra également aisément que la structure en cage du support du dispositif selon l'invention est compatible avec une large gamme de pignons, présentant des formes et dimensions différentes, dès lors que ces pignons peuvent entrer dans la cage.

Naturellement, la qualité du rodage suppose également que l'axe de l'alésage de la pièce coïncide au mieux avec l'axe de rodage et, pour procurer une mise automatique en coaxialité dans l'hypothèse où, initialement, l'axe de l'alésage de la pièce retenue par le support ne coïnciderait pas exactement avec l'axe de rodage, il est proposé un mode de mise en oeuvre préféré du dispositif selon l'invention, caractérisé en ce qu'il comporte en outre un corps porteur fixe dans toute direction perpendiculaire à l'axe de rodage et des moyens de liaison entre le corps porteur et le support, portant lui-même les moyens de plaquage, les moyens de liaison étant propres à permettre une coïncidence de l'axe longitudinal avec l'axe de rodage en autorisant un débattement limité de l'axe longitudinal dans toute direction perpendiculaire à l'axe de rodage tout en conservant un parallélisme de l'axe longitudinal avec l'axe de rodage et à immobiliser le support à l'encontre d'une translation longitudinale et d'une rotation autour de l'axe de rodage par rapport au corps porteur.

Une immobilisation du support notamment à l'encontre d'une rotation autour de l'axe de rodage par rapport au corps porteur, lui-même solidarisé avec un bâti de la machine de rodage, permet d'assurer également une immobilisation de la pièce à roder, à l'encontre d'une rotation, par rapport à ce bâti, c'est-à-dire empêche la pièce de tourner avec l'outil de rodage. Cette immobilisation est compatible avec une large gamme de pièces, par exemple avec différents types de pignons d'une même boîte de vitesses qui peuvent ainsi être montés successivement sur un même dispositif selon l'invention en vue de leur rodage. On remédie ainsi à un inconvénient de l'art antérieur, qui soit imposait l'utilisation de montages différents pour différentes pièces, soit, dans le cas de pignons, assurait l'arrêt, en rotation, du pignon en cours de rodage au moyen de deux doigts engagés dans la denture du crabot, avec le risque de défauts de crabotage entraînant un arrêt de la machine de rodage, voire une détérioration du pignon.

Les moyens de liaison entre le corps porteur et le support peuvent être réalisés de différentes façons et, selon un mode de réalisation particulièrement simple et fiable, on prévoit qu'ils comportent :
- des moyens d'appui du support sur le corps porteur dans les deux sens longitudinaux et de guidage du support en translation par rapport au corps porteur dans toute direction perpendiculaire à l'axe de rodage, par exemple sous la forme de deux butées antagonistes, à billes,
- des moyens d'arrêt du support en rotation autour de l'axe de rodage par rapport au corps porteur, par exemple sous une forme comportant deux faces transversales de glissement en vis-à-vis, respectivement du support et du corps porteur, une rondelle transversale plate intercalée entre les deux faces transversales de glissement et susceptible de glisser transversalement contre l'une et l'autre, par rapport au support et au corps porteur, et des moyens de guidage de la rondelle en translation suivant une première direction déterminée perpendiculaire à l'axe de rodage, par rapport au corps porteur, et suivant une deuxième direction déterminée perpendiculaire à la première direction déterminée et à l'axe longitudinal, par rapport au support.

De tels moyens d'appui et de tels moyens d'arrêt permettent à la liaison entre le support et le corps porteur de subir sans déformation ni dommage des efforts considérables, permettant d'immobiliser de façon sûre la pièce à roder vis-à-vis d'une rotation par rapport au bâti de la machine de rodage.

Comme il est connu de façon générale dans le domaine de la mécanique, les moyens de guidage de la rondelle en translation peuvent avantageusement comporter :
- deux doigts longitudinaux solidaires du corps porteur, en saillie sur la face transversale de glissement de celui-ci dans des positions diamétralement opposées en référence à l'axe de rodage, suivant la première direction déterminée,
- deux doigts longitudinaux solidaires du support, en saillie sur la face transversale de glissement de celui-ci dans des positions diamétralement opposées en référence à l'axe longitudinal, suivant la deuxième direction déterminée,
- une glissière aménagée dans la rondelle suivant la première direction et recevant les deux doigts du corps porteur, dans une relation de guidage en translation relative suivant la première direction,
- une glissière aménagée dans la rondelle suivant la deuxième direction et recevant les deux doigts du support, dans une relation de guidage en translation relative suivant la deuxième direction.

Pour faciliter les mouvements entre la rondelle et le support, d'une part, la rondelle et le corps porteur, d'autre part, on peut prévoir que chaque doigt porte, à l'intérieur de la glissière respective un galet tourillonnant autour d'un axe parallèle à l'axe de rodage et à l'axe longitudinal, ce qui permet d'assurer la liberté de mouvement relatif même lorsque les efforts à transmettre sont particulièrement importants. Naturellement, dans la mesure où cela est compatible avec les efforts à transmettre, on pourrait également adopter une coopération par glissement entre les doigts et les glissières.

L'adaptabilité précitée des dispositifs selon l'invention à des pièces présentant des caractéristiques géométriques différentes, par exemple différents pignons d'une même boîte de vitesses, naturellement avec immobilisation efficace de chaque pièce successivement dans le support, peut s'accommoder d'une face transversale d'appui définie directement par le support, mais elle est accrue lorsque, selon un mode de réalisation préféré, le support comporte un premier mors d'appui longitudinal de la pièce, définissant la première face transversale d'appui, et des moyens de montage amovible du premier mors.

Par exemple, à cet effet, le support comporte un couvercle transversal définissant ladite structure longitudinalement en regard des moyens de plaquage et les moyens de montage amovible du premier mors comportent des premiers moyens porteurs pour intercaler successivement, à volonté, longitudinalement entre les moyens de plaquage et le couvercle, contre ce dernier, plusieurs premiers mors dont chacun définit une première face d'appui, ce qui permet de mettre en place rapidement et à coup sûr le premier mors adapté respectivement à chacune des pièces à roder successivement.

De façon particulièrement simple et fiable, on peut prévoir que les premiers moyens porteurs comportent un premier tiroir transversal longitudinalement interposé entre les moyens de plaquage et le couvercle et présentant une pluralité d'ajours longitudinaux de logement pour un premier mors respectif, mutuellement juxtaposés suivant une première direction transversale déterminée dudit plan, et des moyens de guidage du premier tiroir en translation suivant cette première direction transversale déterminée, par rapport au support. De préférence, les premiers moyens porteurs comportent en outre des moyens de verrouillage du premier tiroir à volonté, par rapport au support, dans toute position dans laquelle il présente l'un des premiers mors dans une position déterminée dans laquelle le trou longitudinal respectif de passage de l'outil de rodage débouche dans la première face d'appui respective suivant l'axe longitudinal, ainsi que, de préférence, des moyens de détection de la position du premier tiroir suivant la première direction transversale déterminée, ce qui permet de s'assurer à chaque instant du positionnement correct du tiroir, et avec lui du premier mors.

Afin d'éviter que l'opération de serrage d'une pièce entre les moyens de plaquage et le premier mors ne sollicite le premier tiroir et ses moyens de guidage en translation par rapport au support, c'est-à-dire pour que ces efforts soient repris directement par le support lui-même, on prévoit avantageusement, lorsque le couvercle constitue une partie supérieure du support, que chaque ajour de logement soit propre à recevoir le premier mors respectif de haut en bas en le laissant libre de se déplacer de bas en haut, et que le couvercle, d'une part, et chaque premier mors, d'autre part, comportent des moyens d'appui de ce premier mors vers le haut contre le couvercle lorsque ce premier mors occupe une position déterminée dans laquelle le trou longitudinal respectif de passage de l'outil de rodage débouche dans la face d'appui respective suivant l'axe longitudinal. Ainsi, l'opération de serrage d'une pièce dans le support, s'effectuant dans un tel cas par montée des moyens de plaquage vers le couvercle, alors que la pièce repose sur les moyens de plaquage, met d'abord cette pièce au contact du premier mors puis provoque le soulèvement de ce dernier, conjointement avec la pièce, jusqu'à ce que le premier mors prenne appui vers le haut sur le couvercle du support, avant que le serrage proprement dit ne commence.

Différents modes de réalisation des moyens de plaquage peuvent également être envisagés mais, de préférence, ces moyens comportent un vérin longitudinal présentant un corps solidaire du support et une tige en saillie longitudinale hors du corps, vers la première face d'appui, ce qui permet de contrôler avec précision l'effort longitudinal appliqué à chaque pièce en vue de son immobilisation.

Pour conserver l'efficacité du plaquage même si la pièce présente certains défauts géométriques, par exemple un léger défaut de parallélisme entre des faces destinées à venir respectivement au contact de la face d'appui du support et au contact des moyens de plaquage, on prévoit avantageusement que les moyens de plaquage comportent un deuxième mors d'appui longitudinal de la tige du vérin contre la pièce, définissant la deuxième face transversale d'appui, des moyens, élastiquement flexibles transversalement, de liaison entre le deuxième mors et la tige du vérin, pour permettre une inclinaison limitée de la deuxième face transversale d'appui par rapport à la transversabilité, et des moyens d'immobilisation du deuxième mors en rotation autour de l'axe longitudinal par rapport au support, par exemple sous une forme comportant un doigt en saillie transversale par rapport au deuxième mors et solidaire de celui-ci, et une lumière longitudinale du support, recevant le doigt avec possibilité de translation longitudinale relative, de basculement du doigt par rapport à la transversalité et de rotation du doigt sur lui-même.

Enfin, pour accélérer la mise en place d'une pièce à roder après rodage de la pièce précédente, d'une part, et assurer un positionnement aussi précis que possible de chaque pièce à roder par rapport au support, d'autre part, on prévoit de préférence que ce dernier comporte des deuxièmes moyens porteurs pour intercaler successivement, à volonté, longitudinalement entre les moyens de plaquage et la première face d'appui, plusieurs pièces dans une position telle que l'axe de leur alésage coïncide au moins approximativement avec l'axe longitudinal.

Ces deuxièmes moyens porteurs peuvent avantageusement comporter un deuxième tiroir transversal longitudinalement interposé entre les moyens de plaquage et la première face d'appui et présentant une pluralité d'ajours longitudinaux de logement pour une pièce respective, mutuellement juxtaposés suivant une deuxième direction transversale déterminée dudit plan, et des moyens de guidage du deuxième tiroir en translation suivant cette deuxième direction transversale déterminée, par rapport au support.

Lorsque la première face d'appui est située au-dessus des moyens de plaquage, on prévoit avantageusement que chaque ajour de logement du deuxième tiroir transversal soit propre à recevoir la pièce respective de haut en bas en la laissant libre de se déplacer de bas en haut. Ainsi, lorsque les moyens de plaquage s'approchent de la première face d'appui, par un mouvement de levée, en vue d'assurer le serrage d'une pièce contre cette face d'appui, ils prennent d'abord en charge la pièce, à l'intérieur de son ajour de logement dans le deuxième tiroir, pour la lever avant de la plaquer contre la première face d'appui.

De préférence, le deuxième tiroir comporte, dans au moins un ajour de logement, une cale interchangeable de positionnement d'une pièce déterminée, ce qui permet d'utiliser un tiroir unique pour une large gamme de pièces à roder au moyen du dispositif selon l'invention.

D'autres caractéristiques et avantages d'un tel dispositif ressortiront de la description ci-dessous, relative à un exemple non limitatif de réalisation, ainsi que des dessins annexés qui font partie intégrante de cette description.

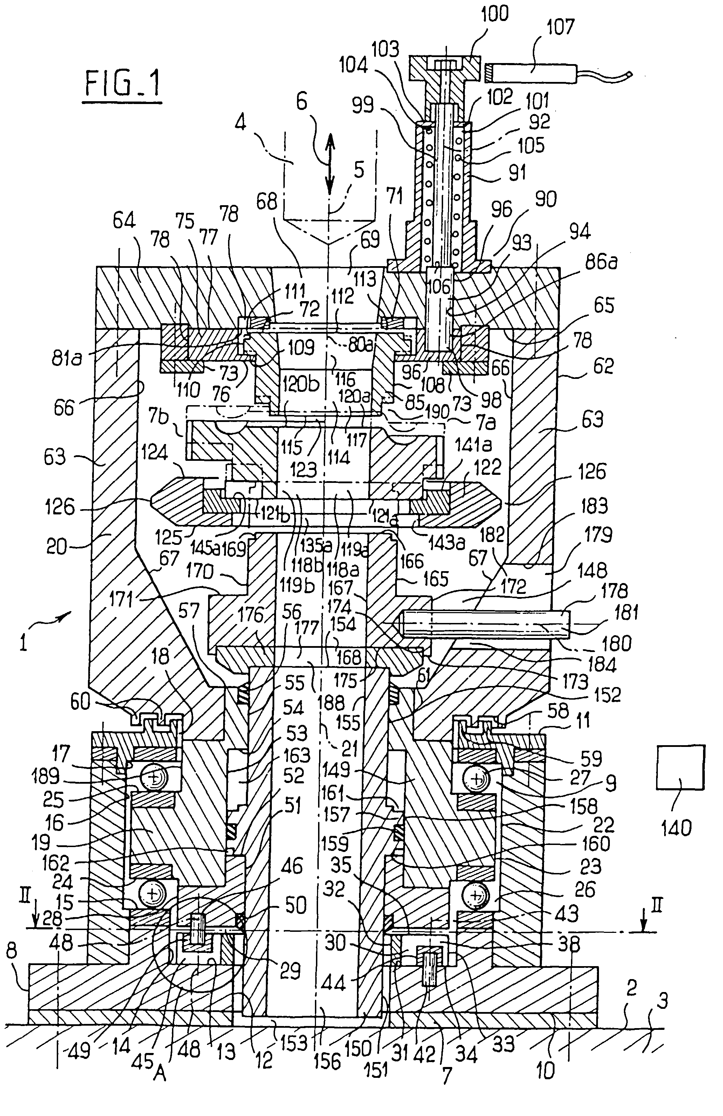

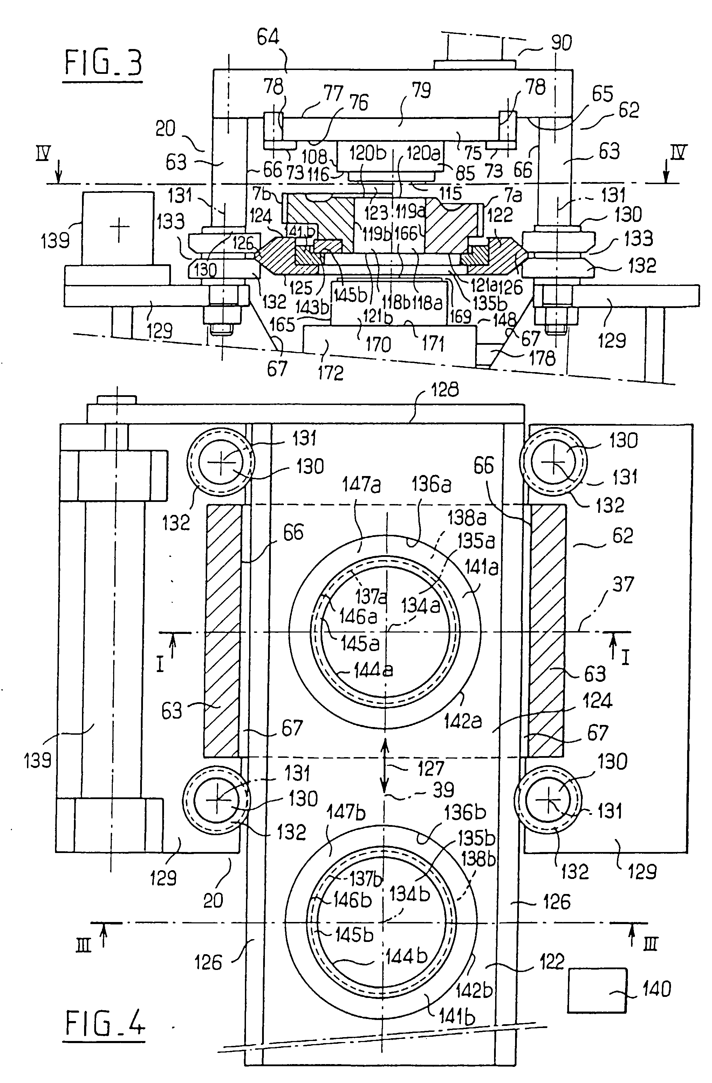

- La figure 1 montre un dispositif selon l'invention en coupe pour l'essentiel par un plan repéré en I-I à la figure 4, perpendiculaire au plan de symétrie du support et passant par l'axe longitudinal de celui-ci, l'axe de rodage et l'axe de l'alésage d'une pièce à roder, ces axes étant supposés confondus, et pour une partie repérée en A sur cette figure par le plan de symétrie du support ; on a illustré en trait plein un état du dispositif dans lequel une pièce rodée ou à roder est libre et en trait mixte un état du dispositif dans lequel une telle pièce est immobilisée par serrage longitudinal dans le support, notamment pendant le rodage.
- La figure 2 montre une vue partielle, en coupe transversale suivant un plan repéré en II-II à la figure 1.
- La figure 3 montre une vue du dispositif en coupe par un plan parallèle au plan repéré en I-I à la figure 4 et lui-même repéré en III-III à la figure 4.
- La figure 4 montre une vue en coupe transversale par un plan repéré en IV-IV à la figure 3.
- La figure 5 montre une vue en plan, de dessus, du premier tiroir, destiné à porter plusieurs mors pour les présenter successivement dans le support.

On se référera en premier lieu à la figure 1, où l'on a désigné par 1 le dispositif selon l'invention, monté sur une face supérieure 2, plane et horizontale, du bâti 3 d'une machine de rodage non illustrée. Cette machine comporte par ailleurs un outil de rodage ou rodoir 4 disposé au-dessus du bâti 3, suivant un axe de rodage 5 fixe par rapport au bâti 1 et perpendiculaire à la face 2. Des moyens moteurs commandés, non illustrés, permettent d'une part d'entraîner le rodoir 4 en rotation autour de l'axe 5 par rapport au bâti 3, et d'autre part de provoquer des mouvements de rapprochement et d'éloignement du rodoir 4 par rapport à la face 2 du bâti 3 suivant une direction 6 définie par l'axe 5, afin d'effectuer le rodage d'une pièce telle qu'un pignon, dont deux exemples différents 7a et 7b ont été illustrés respectivement dans la moitié droite et dans la moitié gauche de la figure 1 et de la figure 3. Bien que les mouvements de rapprochement et d'éloignement du rodoir 4 par rapport à la face 2 du bâti 3 puissent résulter d'un mouvement de ce dernier en direction verticale, par rapport à un rodoir 4 fixe dans cette direction, le bâti 3 sera considéré par la suite comme fixe et le rodoir 4 comme mobile par rapport à lui. En outre, bien que la verticalité de l'axe 5 et le positionnement du rodoir 4 au-dessus de la face 2 du bâti 3 constituent une disposition actuellement préférée, exploitée dans certains aspects du mode de mise en oeuvre de l'invention illustré et seule prise en compte dans la suite de la description, on pourrait également réaliser conformément à l'invention des dispositifs 1 correspondant à une autre orientation de l'axe 5 et à un autre positionnement du rodoir 4 par rapport à la face 2 du bâti 3.

Le dispositif 1 selon l'invention comporte un corps porteur 8 reposant à plat, par l'intermédiaire d'une semelle 7, sur la face 2 du bâti 3 et solidarisé avec ce dernier par exemple par boulonnage. Ce corps porteur 8 présente une forme générale annulaire de révolution autour de l'axe 5, vers lequel il définit une cavité 9 également annulaire de révolution autour de cet axe.

Plus précisément, d'une face inférieure 10 plane, annulaire de révolution autour de l'axe 5 et perpendiculaire à celui-ci, reposant sur la face 2 par l'intermédiaire de la semelle 7, à une face supérieure 11 également plane pour l'essentiel et annulaire de révolution autour de l'axe 5, le corps porteur 8 est délimité vers cet axe 5 par:
- une face périphérique intérieure 12 cylindrique de révolution autour de cet axe et se raccordant d'une part, vers le bas, à la face inférieure 10 et d'autre part, vers le haut, à une face supérieure 13 également plane, annulaire de révolution autour de l'axe 5,
- une face périphérique intérieure 14 cylindrique de révolution autour de l'axe 5 avec un diamètre supérieur à celui de la face 12 et se raccordant d'une part vers le bas à la face supérieure 13 et d'autre part vers le haut à une face supérieure 15 plane, annulaire de révolution autour de l'axe 5,
- une face périphérique intérieure 16 cylindrique de révolution autour de l'axe de rodage 5 avec un diamètre supérieur à celui de la face 14 et se raccordant d'une part vers le bas à la face 15 et d'autre part vers le haut à une face inférieure 17 plane, annulaire de révolution autour de l'axe 5,
- une face périphérique intérieure 18 cylindrique de révolution autour de l'axe 5 avec un diamètre sensiblement égal à celui de la face périphérique intérieure 14 et se raccordant d'une part vers le bas à la face inférieure 17 et d'autre part vers le haut à la face supérieure 11.

De façon générale, on entend ici par "face supérieure" une face tournée vers le haut et par "face inférieure" une face tournée vers le bas, par "face périphérique intérieure" une face tournée vers l'axe 5 ou vers l'un ou l'autre d'axes définis, voisins de celui-ci, décrits ultérieurement, et par "face périphérique extérieure" une face tournée dans le sens d'un éloignement par rapport à l'axe 5 ou par rapport à un tel axe défini, voisin de celui-ci.

Les deux faces 15 et 17 sont placées directement en regard l'une de l'autre, suivant la direction 6, et délimitent la cavité 9 respectivement vers le bas et vers le haut.

Elles servent de butée respectivement vers le bas et vers le haut, sans jeu suivant la direction 6 mais avec possibilité de débattement limité dans toute direction perpendiculaire à l'axe 5, pour une collerette annulaire 19 d'un support 20 présentant un axe longitudinal 21 autour duquel la collerette 19, transversale, présente une forme de révolution. Cet axe longitudinal 21 coïncide avec l'axe de rodage 5 dans une position, illustrée aux figures, dans laquelle la collerette 19 respecte un jeu annulaire, uniforme, continu 22 par rapport à la face 16 qui délimite la cavité 9 dans le sens d'un éloignement par rapport à l'axe de rodage 5, et peut se décaler de façon limitée par rapport à l'axe de rodage 5, dans toute direction perpendiculaire à celui-ci et transversale en référence à l'axe 21, par déplacement de la collerette 19 entre les faces 15 et 17 jusqu'à buter éventuellement contre la face 16 en annulant localement le jeu 22. La direction 6 est ainsi commune, en permanence, aux deux axes 5 et 21.

A cet effet, la collerette 19, délimitée vers la face 16 par une face périphérique extérieure 23 cylindrique de révolution autour de l'axe 21 avec un diamètre inférieur à celui de la face 16, mesuré en référence à l'axe 5, est délimitée vers le bas par une face inférieure 24 de butée vers le bas sur la face 15 suivant la direction 6, et vers le haut par une face supérieure 25 de butée vers le haut contre la face 17 suivant cette direction 6. Ces deux faces 24 et 25 sont annulaires, planes, de révolution autour de l'axe 21, et leur espacement mutuel parallèlement à cet axe est inférieur à l'espacement mutuel des faces 15 et 17 parallèlement à l'axe 5 et entre les faces 24 et 15, d'une part, 25 et 17, d'autre part, est intercalé un jeu respectif 26, 27 de billes de roulement compensant intégralement cette différence pour empêcher tout débattement entre la collerette 19 et le corps porteur 8 suivant la direction 6 tout en facilitant le débattement relatif précité perpendiculairement à l'axe 5. De façon aisément compréhensible par un homme du métier, les faces 15, 17, 24, 25 présentent de préférence une dureté accrue, en comparaison avec le reste du corps porteur 8 et du support 20, et sont par exemple définies par une bague annulaire rapportée respective, non référencée.

Les faces 24 et 25 se raccordent à la face 23 dans le sens d'un éloignement par rapport à l'axe 21 alors que, dans le sens d'un rapprochement par rapport à cet axe, elles se raccordent à une face périphérique extérieure respective 28, 189 cylindrique de révolution autour de l'axe 21 avec un diamètre respectif inférieur à celui de la face 14 et à celui de la face 18, de telle sorte que ces faces 28 et 189 respectent le jeu 22 précité, ou un jeu supérieur, transversalement à l'axe 21, respectivement vis-à-vis de cette face 14 et vis-à-vis de cette face 18. Les faces 28 et 189 s'étendent en effet respectivement vers le bas jusqu'à se placer en regard de la face 14 sans toutefois atteindre la face 13 et vers le haut en regard de la face 18 jusqu'au-dessus de la face supérieure 11.

Plus précisément, vers le bas, la face 28 se raccorde à une face inférieure plane 29, annulaire de révolution autour de l'axe 21 et placée en regard de la face 13 suivant la direction 6, quelle que soit la position que la collerette 19 occupe à l'intérieur de la cavité 9 dans les limites autorisées par le jeu 22, perpendiculairement à l' axe 5.

Toutefois, la face 29 respecte vis-à-vis de la face 13 un jeu 30 suivant la direction 6, et à l'intérieur de ce jeu 30 est logée une rondelle plate 31 destinée à assurer une immobilisation du support 20 à l'encontre d'une rotation autour de l'axe 5 par rapport au corps porteur 8 tout en autorisant le débattement relatif précité dans toute direction perpendiculaire à l'axe 5.

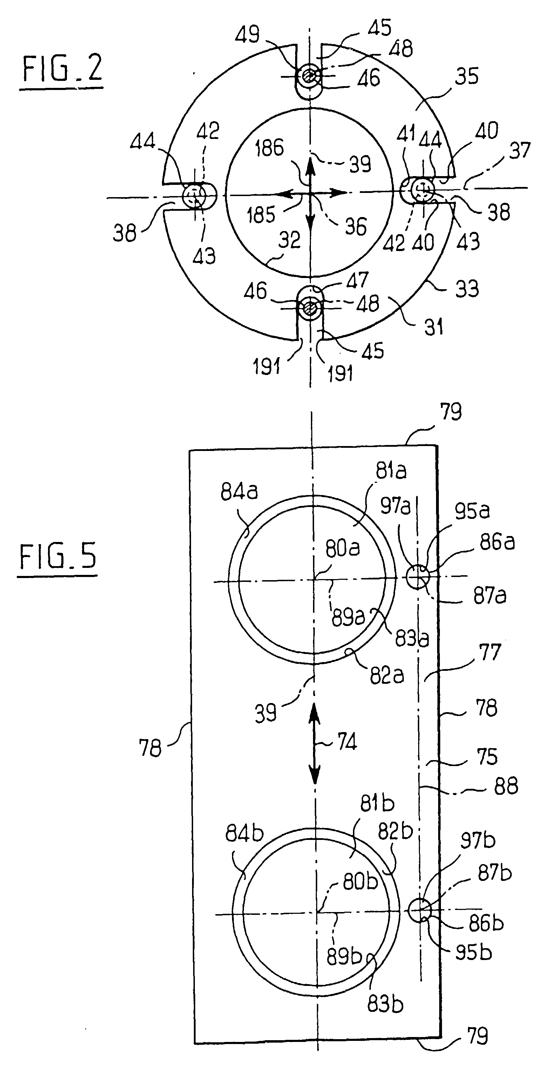

A cet effet, comme le montre mieux la figure 2, la rondelle 31 présente une forme générale annulaire de révolution autour d'un axe propre 36 qui est confondu, dans l'exemple illustré, avec les axes 5 et 21 eux-mêmes confondus mais peut se décaler par rapport à l'un ou l'autre en restant parallèle à lui. Cette forme est définie notamment par une face périphérique intérieure 32 cylindrique de révolution avec un diamètre sensiblement identique à celui de la face 12 et par une face périphérique extérieure 33 également cylindrique de révolution mais avec un diamètre intermédiaire entre les diamètres respectifs des faces 12 et 14, et par exemple égal à celui de la face 28. Ces deux faces 32 et 33 raccordent mutuellement deux faces annulaires, planes,- perpendiculaires à l'axe 36, à savoir une face inférieure 34 en appui à plat, avec possibilité de glissement relatif, sur la face 13 du corps porteur 8 et une face supérieure 35 qui, bien que respectant dans l'exemple illustré un jeu fonctionnel, suivant la direction 6, par rapport à la face 29 du support 20, peut être considérée également comme en contact glissant avec celle-ci.

Suivant un plan moyen 37 incluant l'axe 36, la rondelle 31 présente une première glissière suivant une direction 185 perpendiculaire à cet axe 36, réalisée sous forme d'une paire d'encoches 38 qui sont diamétralement opposées en référence à l'axe 36 suivant la direction 185 et mutuellement symétriques par rapport à un plan 39 perpendiculaire suivant cet axe 36 au plan 37, et dont chacune est respectivement symétrique par rapport à ce plan 37. Ces deux encoches 38 débouchent dans la face périphérique extérieure 33 de la rondelle 31, dans le sens d'un éloignement par rapport à l'axe 36, et dans les faces 34 et 35 de cette rondelle, suivant la direction 6, mais sont fermées vers l'axe 36, c'est-à-dire n'atteignent pas la face périphérique intérieure 32. Chacune d'entre elles est délimitée par deux flancs plans 40 parallèles au plan 37 et mutuellement symétriques par rapport à celui-ci, et par un fond concave 41, par exemple hémicylindrique de révolution autour d'un axe non référencé, situé dans le plan 37 et parallèle à l'axe 36.

Comme le montre également la figure 1 dans sa partie droite, chacune des encoches 38 loge un doigt respectif 42 que le corps porteur 8 porte de façon solidaire, en saillie sur sa face 13 à l'intérieur du jeu 30, dans une position intermédiaire entre ses faces 12 et 14, suivant un axe respectif 43 parallèle à l'axe 5 par rapport auquel les deux axes 43 sont mutuellement symétriques.

A l'intérieur de l'encoche 38 respective, chaque doigt 42 porte, en rotation autour de son axe 43, un galet respectif 44 présentant, en référence à l'axe 43 respectif, un diamètre sensiblement identique à la distance séparant mutuellement les deux flancs 40 de l'encoche 38, ce qui empêche la rondelle 31 de tourner autour de l'axe 5 par rapport au corps porteur 8, c'est-à-dire assure une fixité du plan 37 et de la direction 185 par rapport à ce dernier, avec inclusion de l'axe 5 dans ce plan 37, tout en autorisant un débattement de la rondelle 31 par rapport au corps porteur 6 suivant la direction 185, qui est perpendiculaire à la fois aux axes 36 et 5, que ces derniers soient confondus ou mutuellement décalés du fait d'un tel déplacement de la rondelle 31.

De même, suivant le plan 39, la rondelle 31 comporte une deuxième glissière, par conséquent perpendiculaire à la première glissière définie par les encoches 38, sous forme de deux encoches 45 qui sont mutuellement symétriques par rapport au plan 37, diamétralement opposées en référence à l'axe 36 suivant une direction 186 perpendiculaire à la fois à cet axe et à la direction 185 et respectivement symétriques par rapport au plan 39.

Identiques aux encoches 38, ces encoches 45 débouchent dans les faces 34 et 35 de la rondelle 31, suivant la direction 6, ainsi que dans la face périphérique extérieure 33 de la rondelle 31, dans le sens d'un éloignement par rapport à l'axe 36, mais sont fermées vers ce dernier, c'est-à-dire n'atteignent pas la face périphérique intérieure 32 de la rondelle 31. Elles sont délimitées chacune par deux flancs plans 191 parallèles au plan 39 et mutuellement symétriques par rapport à celui-ci, et par un fond 47 concave, raccordant ces deux flancs 191 et présentant une forme par exemple hémicylindrique de révolution autour d'un axe non référencé, situé dans le plan 39 et parallèle à l'axe 36.

Comme le montre également la figure 1 dans sa partie gauche, où l'on a illustré en A un détail décalé angulairement de 90° par rapport au reste de cette figure, en référence à l'axe 21 du support 20, chaque encoche 45 reçoit un doigt respectif 46 que le support 20 présente de façon solidaire, en saillie sous sa face 29 suivant un axe respectif 48 parallèle à l'axe 21, par rapport auquel les deux axes 48 sont mutuellement symétriques, dans une zone radialement intermédiaire de la face 29, en référence à l'axe 21. A l'intérieur de l'encoche respective 45, chaque doigt 46 porte, en rotation relative autour de l'axe respectif 48, un galet respectif 49 présentant en référence à cet axe un diamètre sensiblement identique à la distance séparant mutuellement les deux flancs 191 de l'encoche 45, ce qui assure la fixité du plan 39 par rapport au support 20, dont l'axe longitudinal 21 est ainsi placé en permanence dans ce plan 39, tout en autorisant un déplacement du support 20 par rapport à la rondelle 31 suivant la direction 186, située dans ce plan 39 et perpendiculaire aux axes 21 et 36, quelle que soit la position relative de ces derniers.

Toute combinaison entre le mouvement précité de la rondelle 31 par rapport au corps porteur 8 suivant la direction 185 du plan 37, laquelle est perpendiculaire à la fois à l'axe 36 et à l'axe 5, et un tel déplacement du support 20 par rapport à la rondelle 31 suivant la direction 186 du plan 39, laquelle est perpendiculaire à la fois aux axes 36 et 21, autorise un débattement du support 20 en translation dans toute direction perpendiculaire à l'un ou l'autre des axes 5 et 21, par rapport au corps porteur 8, en interdisant toute rotation relative.

Naturellement, la distance séparant les fonds 41 des deux encoches 38, suivant le plan 37, est inférieure, à cet effet, à la distance séparant mutuellement les deux galets 44 suivant ce plan 37, de même que la distance séparant mutuellement les fonds 47 des deux encoches 45 suivant le plan 39 est inférieure à la distance séparant mutuellement, suivant ce plan, les galets 49 ; en outre, l'espacement mutuel des galets 44 et celui des galets 49 sont tels que ces galets n'échappent pas à l'encoche respective 38, 45 lors de débattement relatif dans les limites autorisées par le jeu 22 entre la face 23 de la collerette 19 et la face 16 du corps porteur 8, de façon aisément déterminable par un homme du métier.

Vers l'axe 21, la face 29 du support 20 se raccorde, par l'intermédiaire d'une gorge annulaire de révolution autour de l'axe 21, logeant un joint d'étanchéité 50 dont l'utilité apparaîtra ultérieurement, à une face périphérique intérieure 51 cylindrique de révolution autour de l'axe 21, avec un diamètre inférieur à celui de la face 12 du corps porteur 8. Vers le haut, cette face périphérique intérieure 51 se raccorde à une face supérieure 52 annulaire, plane, de révolution autour de l'axe 21, qui se raccorde elle-même, dans le sens d'un éloignement par rapport à cet axe, à une face périphérique intérieure 53 cylindrique de révolution autour de cet axe avec un diamètre intermédiaire entre ceux des faces 51, d'une part, 28 et 29, d'autre part. Vers le haut, cette face 53 se raccorde elle-même à une face inférieure 54 plane, annulaire de révolution autour de l'axe 21, qui se raccorde dans le sens d'un rapprochement par rapport à celui-ci à une face périphérique intérieure 55 cylindrique de révolution autour de cet axe avec un diamètre identique à celui de la face 51. Vers le haut, par l'intermédiaire d'une gorge logeant un autre joint d'étanchéité 56 dont l'utilité apparaîtra ultérieurement, la face 55 se raccorde à une face supérieure 57 plane, annulaire de révolution autour de l'axe 21 et située à un niveau supérieur à celui de la face supérieure 11 du corps porteur 8, c'est-à-dire à l'extérieur de celui-ci.

Egalement à un niveau supérieur à celui de la face supérieure 11 du corps porteur 8, c'est-à-dire à l'extérieur de celui-ci, la face 189 du support 20 se raccorde à une face inférieure 58 annulaire, plane, de révolution autour de l'axe 21. Cette face 58 est ainsi placée en regard de la face 11, suivant la direction 6, mais à une faible distance de cette face supérieure 11 et, selon un mode de réalisation préféré, ces deux faces 11 et 58 présentent des nervures respectives 59, 60 annulaires de révolution respectivement autour de l'axe 5 et autour de l'axe 21, avec des dimensions respectives, aisément déterminables par un homme du métier, telles qu'elles alternent dans le sens d'un éloignement par rapport à ces axes, de façon à constituer des chicanes formant obstacle à la pénétration de poussière et de liquide, par exemple de résidus de rodage, à l'intérieur de la cavité 9, d'une part, mais ne constituent pas un obstacle au débattement précité du support 20 par rapport au corps porteur 8 dans toute direction perpendiculaire à l'axe 5 ou à l'axe 21, d'autre part.

Les faces 57 et 58 délimitent respectivement vers le haut et vers le bas une paroi plate 61, perpendiculaire aux axes 5 et 21, constituant la partie inférieure d'une cage 62 définie par le support 20 au-dessus du corps porteur 8.

De façon caractéristique de la présente invention, la cage 62 est fermée lorsqu'on la voit de la façon illustrée aux figures 1 et 3, c'est-à-dire suivant une direction perpendiculaire au plan 37, à savoir par exemple la direction 186 située dans le plan 39 et perpendiculaire à l'axe 21, et elle est symétrique par rapport au plan 39 dont on rappellera que, du fait de la coopération entre les galets 49 et les encoches 45, il est fixe par rapport au support 20. La cage 62 est par contre ouverte de part en part suivant cette direction transversale 186 du plan 39.

A cet effet, la cage 62 comporte, outre la paroi transversale 61, deux parois latérales plates 63 parallèles au plan 39 et mutuellement symétriques par rapport à ce dernier, de même que par rapport à l'axe 21, et se raccordant vers le bas à la paroi 61, et un couvercle 64 plat, transversal, raccordant mutuellement, de façon solidaire, les deux parois latérales 63 à leur partie supérieure. Outre la symétrie précitée de la cage 62 par rapport au plan 39, c'est-à-dire une symétrie mutuelle des parois latérales 63 par rapport à ce plan et une symétrie de la paroi 64 par rapport à ce plan, la cage 62 présente une symétrie par rapport à un plan qui, à la fois, est perpendiculaire au plan 39 et inclut l'axe 21, cet autre plan de symétrie se confondant avec le plan 37 lorsque, comme il est illustré, les axes 5 et 21 coïncident ; alors, chacune des parois latérales 63 est symétrique par rapport à ce plan 37, de même que le couvercle 64 et la paroi 61.

La forme des parois latérales 63 et du couvercle 64 est par ailleurs indifférente. Par exemple, le couvercle 64 est délimité vers le bas, entre les parois latérales 63, par une face inférieure 65 plane, perpendiculaire à l'axe 21, et les parois latérales 63 sont délimitées dans leurs zones adjacentes au couvercle 64 par une face respective 66 également plane, quant à elle parallèle au plan 39 par rapport auquel les deux faces 66 sont mutuellement symétriques. Vers le bas, ces faces 66 se raccordent à la face 57 par une face respective 67 également plane, se rapprochant du plan 39 de haut en bas, c'est-à-dire de son raccordement avec la face 66 à son raccordement avec la face 57, les deux faces 67 étant mutuellement symétriques par rapport au plan 39. D'autres conformations pourraient cependant être adoptées sans que l'on sorte pour autant du cadre de la présente invention.

Suivant l'axe 21, le couvercle 64 est percé de part en part d'un trou 68 de passage du rodoir 4, lequel trou 68 est avantageusement délimité par une face périphérique intérieure 69 tronconique de révolution autour de l'axe 21, avec un diamètre décroissant de haut en bas tout en restant supérieur au diamètre que le rodoir 4 présente en référence à l'axe 5. Ainsi, lorsqu'on introduit le rodoir 4, suivant l'axe 5, dans le trou 68 dont l'axe 21 ne coïncide pas nécessairement avec l'axe 5, un contact entre le rodoir 4 et la face périphérique intérieure 69 peut déplacer progressivement le support 20 par rapport au corps porteur 8, grâce à la coopération de la collerette 19 avec ce dernier par l'intermédiaire des jeux de billes 26 et 27 et à la coopération de la rondelle 31 avec le support 20 et le corps porteur 8, pour tendre à amener l'axe 21 en coïncidence avec l'axe 5.

Vers le bas, le trou 68 débouche dans la face inférieure 65 du couvercle 64 par l'intermédiaire d'un chambrage 70 annulaire de révolution autour de l'axe 21 et logeant, de façon solidaire, une bague d'appui 71 également annulaire de révolution autour de l'axe 21 et entourant coaxialement le trou 68 sans interférer avec la face périphérique intérieure 69 de celui-ci. La bague 71 présente notamment vers le bas une face annulaire plane 72, perpendiculaire à l'axe 21.

Sous la face inférieure 65 du couvercle 64 sont par ailleurs montées, de façon solidaire de celui-ci, par exemple par boulonnage, deux glissières 73 parallèles au plan 39 et mutuellement symétriques par rapport à celui-ci, respectivement de part et d'autre du chambrage 70 bordant le trou 68, entre ce chambrage 70 et une paroi latérale 63 respective.

Ces glissières 73 reçoivent, et guident vis-à-vis d'un coulissement contre la face inférieure 65 du couvercle 64, suivant une direction transversale 74 du plan 39, un tiroir 75 plus particulièrement visible aux figures 1, 3 et 5.

Le tiroir 75 présente la forme d'une plaque parallélépipédique, notamment délimitée par une face inférieure 76 et une face supérieure 77 planes, mutuellement parallèles et perpendiculaires à l'axe 21 ; la face supérieure 77 s'appuie à plat, dans une relation de contact mutuel coulissant, contre la face inférieure 65 du couvercle 64 alors que la face inférieure 76 s'appuie à plat sur les glissières 73.

Le tiroir 75 est par ailleurs délimité par deux faces latérales 78 planes, parallèles au plan 39 et mutuellement symétriques par rapport à ce dernier, lesquelles faces latérales 78 prennent appui contre les glissières 73, respectivement, dans le sens d'un éloignement par rapport au plan 39, et par deux faces d'extrémité 79 perpendiculaires aux faces 76, 77, 78 et au plan 39, et respectivement symétriques par rapport à celui-ci.

Suivant plusieurs axes, par exemple deux axes 80a, 80b situés dans le plan 39 et perpendiculaires aux faces 76 et 77, c'est-à-dire susceptibles d'être placées en coïncidence avec l'axe 21 par coulissement du tiroir 75 dans les glissières 73, le tiroir 75 est percé de part en part d'un ajour respectif 81a, 81b, présentant une forme de révolution autour de l'axe respectif 80a, 80b.

Chaque ajour 81a, 81b est délimité, dans une zone se raccordant à la face supérieure 77 du tiroir 75, par une face périphérique intérieure 82a, 82b cylindrique de révolution autour de l'axe respectif 80a, 80b avec un diamètre supérieur au diamètre maximal de la face 72 de la bague d'appui 71, et par exemple égal au diamètre maximal du chambrage 70. Dans une zone se raccordant à la face inférieure 76 du tiroir 75, chaque ajour 81a, 81b est délimité par une autre face périphérique intérieure 83a, 83b également cylindrique de révolution autour de l'axe respectif 80a, 80b mais présentant un diamètre inférieur à celui de la face périphérique intérieure 82a, 82b, et par exemple intermédiaire entre les diamètres respectivement maximal et minimal de la face 72 de la bague d'appui 71, mesurés en référence à l'axe 21. Les deux faces périphériques intérieures 82a et 83a, 82b et 83b de chaque ajour 81a, 81b sont raccordées mutuellement par une face annulaire plane respective 84a, 84b, de révolution autour de l'axe respectif 80a, 80b auquel elle est perpendiculaire, en définissant ainsi un épaulement tourné vers le haut, à l'intérieur de chaque ajour 81a, 81b.

Chaque ajour 81a, 81b peut ainsi recevoir coaxialement, retenir transversalement et longitudinalement vers le bas mais sans retenir longitudinalement vers le haut, un mors respectif tel que 85 qu'un coulissement approprié du tiroir 75 suivant la direction 74, par rapport au support 20, permet d'amener coaxialement à l'axe 21, à volonté.

A cet effet, on peut pousser le tiroir 75 manuellement, comme c'est le cas dans l'exemple illustré, ou prévoir des moyens moteurs commandés tels qu'un vérin.

Notamment lorsque, comme il est illustré, l'actionnement du tiroir 75 est manuel, on prévoit avantageusement des moyens d'indexage 86 permettant de le verrouiller par rapport au support 20, de façon déverrouillable, chaque fois que l'un des axes 80a, 80b coïncide avec l'axe 21.

A cet effet, dans l'exemple illustré, le tiroir 75 comporte dans sa face supérieure 77 autant de trous borgnes longitudinaux 86a, 86b que d'ajours 81a, 81b, les différents trous borgnes 86a, 86b étant identiques et occupant une position identique par rapport à l'ajour 81a, 81b associé.

Par exemple, comme on l'a illustré, chaque trou borgne 86a, 86b est aménagé suivant un axe respectif 87a, 87b longitudinal, c'est-à-dire notamment parallèle aux axes 80a et 80b, situé à l'intersection d'un plan 88, parallèle au plan 39 et situé à l'extérieur des ajours 81a, 81b, avec un plan respectif 89a, 89b perpendiculaire au plan 39 et passant par l'axe 80a, 80b de l'ajour associé 81a, 81b, et présente une face périphérique intérieure 95a, 95b cylindrique de révolution autour de l'axe respectif 87a, 87b, avec un diamètre suffisamment faible pour qu'elle n'interfère pas avec la face périphérique intérieure 82a, 82b de l'ajour associé 81a, 81b, et une face de fond 97b, plane et perpendiculaire à l'axe respectif 87a, 87b.

Pour coopérer respectivement avec l'un ou l'autre des trous borgnes 86a, 86b et assurer le verrouillage du tiroir 75, le couvercle 64 porte un verrou 91 qui constitue les moyens d'indexage 90 conjointement avec les trous borgnes 86a, 86b et va être décrit à présent.

Suivant un axe 92 longitudinal, c'est-à-dire parallèle à l'axe 21, et situé en dehors du trou 68, à une distance de l'axe 21 identique à la distance séparant mutuellement les axes 87a et 80a ou 87b et 80b, du même côté de l'axe 21 que les axes 87a et 87b par rapport aux axes 80a et 80b, dans un plan perpendiculaire au plan 39 et incluant l'axe 21, c'est-à-dire dans un plan confondu avec le plan 37 dans la position illustrée, le couvercle 64 est traversé de part en part d'un trou 93 délimité par une face périphérique intérieure 94 cylindrique de révolution autour de l'axe 92 avec un diamètre identique à celui des faces périphériques intérieures 95a et 95b des trous borgnes 86a et 86b.

A l'intérieur de ce trou 93 est monté en coulissement coaxial un pêne 98 délimité dans le sens d'un éloignement par rapport à l'axe 92 par une face périphérique extérieure 96 cylindrique de révolution autour de l'axe 92 avec un diamètre sensiblement identique à celui de la face périphérique intérieure 94 du trou 93, de façon à pouvoir s'engager sans jeu dans la face périphérique intérieure 95a ou 95b d'un trou borgne 86a ou 86b. Vers le bas, le pêne 98 est par exemple délimité par une face inférieure plane 96 perpendiculaire à l'axe 92, apte à venir en contact, à plat, avec la face de fond d'un trou borgne 86a, 86b lorsque, comme il est illustré à la figure 1, le pêne 98 occupe une position de verrouillage du tiroir 75, dans laquelle il fait saillie suivant l'axe 92 sous la face inférieure 65 du couvercle 64.

Au-dessus du couvercle 64, le pêne 98 est prolongé coaxialement par une tige 99 qui en est solidaire et porte de façon également solidaire, vers le haut, un bouton 100 de traction manuelle, vers le haut, sur l'ensemble formé par la tige 99 et le pêne 98.

Entre le bouton 100 et le couvercle 64, la tige 79 traverse coaxialement une cloche 101 fixée au couvercle 64 autour du trou 93 et présentant à sa partie supérieure la forme d'une collerette annulaire 102, de révolution autour de l'axe 92, espacée du couvercle 64 vers le haut.

Vers le haut, cette collerette 102 présente une face annulaire 103 plane, perpendiculaire à l'axe 92, formant une butée vers le bas pour le bouton 100 lorsque le pêne 98 est engagé dans un trou borgne 86a, 86b jusqu'à venir au contact du fond 97a, 97b de celui-ci ou à proximité immédiate de ce fond. Vers le bas, la collerette 102 présente une face inférieure 104 également plane et perpendiculaire à l'axe 92, servant d'appui vers le haut à un ressort hélicoïdal 105 entourant coaxialement la tige 99 à l'intérieur de la cloche 101 et prenant par ailleurs appui vers le bas sur un épaulement annulaire 106 plat, perpendiculaire à l'axe 92, délimitant le pêne 98 vers le haut à sa jonction avec la tige 99 de telle sorte que le ressort 105 sollicite le pêne 98 vers le bas, c'est-à-dire vers l'intérieur d'un trou borgne 86a, 86b lorsqu'un tel trou borgne se trouve placé suivant l'axe 92, pour provoquer un verrouillage automatique du tiroir 75 par rapport au support 20. Une traction appliquée, vers le haut, au bouton 100 permet cependant de tirer le pêne 98 hors du trou borgne 86a, 86b pour faire coulisser le tiroir 75 suivant la direction 74 et amener l'ajour 81a, 81b correspondant à un autre trou borgne 86a, 86b en coaxialité avec le trou 68 du support 20.

Avantageusement, on associe aux moyens d'indexage 90, par exemple au bouton de traction 100, un détecteur de position 107 émettant un signal caractéristique de la position du pêne 98, afin d'indiquer si ce dernier est engagé à fond dans un trou borgne 86a, 86b, ce qui signifie que l'un des ajours 81a, 81b est placé coaxialement en regard du trou 68, ou au contraire si le pêne 98 repose sur la face supérieure 77 du tiroir 75, ce qui signifie qu'aucun ajour 81a, 81b n'est placé en coaxialité avec le trou 68.

A la coaxialité d'un ajour 81a, 81b avec le trou 68 correspond la présentation, coaxialement en regard de celui-ci, d'un mors tel que 85 respectif, adapté à un type de pignon 7a ou 7b à roder.

De préférence, les ajours 81a et 81b sont mutuellement identiques et les mors tels que 85, bien que différents selon les types de pignons à roder, présentent certaines caractéristiques géométriques identiques pour coopérer avec ces ajours 81a, 81b indifféremment.

On décrira cette forme en référence au mors 85 et à la position qu'il occupe à la figure 1, à savoir une position dans laquelle l'axe tel que 80a de l'ajour correspondant tel que 81a du tiroir 75 coïncide avec l'axe longitudinal 21 du support 20.

Le mors 85 ainsi disposé est délimité sur la majeure partie de sa dimension longitudinale, dans le sens d'un éloignement par rapport à l'axe 21, par une face périphérique extérieure 108 cylindrique de révolution autour de cet axe avec un diamètre sensiblement égal à celui de la face périphérique intérieure 83a de l'ajour 81a, de telle sorte que s'établisse entre ces faces 108 et 83a un contact de guidage au coulissement coaxial relatif, sans autre possibilité de déplacement relatif. On retrouve cette caractéristique dimensionnelle sur l'ensemble des mors susceptibles d'être placés dans des ajours du tiroir 75, lorsque, comme il est préféré, les ajours en question sont mutuellement identiques.

De façon également commune à tous les mors tels que 85, la dimension longitudinale de la face 108 est supérieure à celle de la face 83a si bien que, dans la position illustrée à la figure 1, dans laquelle le mors 85 est en appui vers le bas à l'intérieur de l'ajour 81a, la majeure partie de la dimension longitudinale de cette face 108 s'étend en saillie sous la face inférieure 76 du tiroir 75.

Vers le haut, la face 108 se raccorde à une face inférieure plane 109 du mors 85, laquelle présente une forme de révolution autour de l'axe 21 et s'appuie à plat, vers le bas, sur la face 84a de l'ajour 81b pour assurer la retenue du mors 85 vers le bas par rapport au tiroir 75.

Cette face 109, qui se raccorde à la face 108 dans le sens d'un rapprochement par rapport à l'axe 21, se raccorde, dans le sens d'un éloignement par rapport à cet axe 21, à une autre face périphérique extérieure 110 cylindrique de révolution autour de l'axe 21 comme la face 108, mais avec un diamètre intermédiaire entre les diamètres respectifs des faces 83a et 82a de l'ajour 81a,. Cette face périphérique extérieure 110 se raccorde elle-même vers le haut, par l'intermédiaire d'un décrochement 111 annulaire de révolution autour de l'axe 21, à une face supérieure 112 plane, annulaire de révolution autour de l'axe 21, espacée longitudinalement de la face 109 d'une distance inférieure à la distance séparant, parallèlement à l'axe 80a, la face 84a de l'ajour 81a et la face supérieure 77 du tiroir 75. Ainsi, lorsque le mors 85 repose vers le bas, par sa face 109, sur la face 84a de l'ajour 81a, sa face supérieure 112 placée en regard de la face 72 de la bague d'appui 71 respecte un jeu longitudinal 113 par rapport à la face 72 de la bague d'appui 71, mais ce jeu peut être annulé, c'est-à-dire que le mors 85 peut être amené en appui à plat, par sa face 112, sur cette face 72, par un mouvement longitudinal, vers le haut, par rapport au tiroir 75, d'une amplitude telle que la face 108 reste en prise avec la face 83a. Ces caractéristiques des faces 109, 110, 112 du mors 85 se trouvent sur l'ensemble des mors analogues lorsque les ajours 81a et 81b sont mutuellement identiques.

Dans le sens d'un rapprochement vis-à-vis de l'axe 21, la face supérieure 112 du mors 85 se raccorde à un trou 114 traversant celui-ci de part en part, coaxialement, jusqu'à déboucher dans une face inférieure plane 115 du mors 85, à laquelle la face 108 de celui-ci se raccorde vers le bas par l'intermédiaire d'un décrochement 190, annulaire de révolution autour de l'axe 21.

La face inférieure 115 du mors 85 présente une forme générale annulaire de révolution autour de l'axe 21 et plane, mais elle est spécifiquement adaptée dans sa forme de détail et dans ses dimensions à la conformation du pignon 7a ou 7b à roder, et il en est de même du dimensionnement du trou 114.

Dans l'exemple illustré, dans lequel le diamètre minimal de la face périphérique intérieure 69 du trou 68, c'est-à-dire son diamètre à son embouchure dans le chambrage 70 de la face inférieure 65 du couvercle 64, est supérieur au diamètre du rodoir 4, comme il est préféré, le trou 114 est délimité dans sa zone adjacente à la face supérieure 112 du mors 85 par une face périphérique intérieure 116 tronconique de révolution autour de l'axe 21 et convergeant vers le bas, avec une conicité identique à celle de la face périphérique intérieure 69 du trou 68 et des dimensions telles que, lorsque le mors 85 est appliqué par sa face supérieure 112, vers le haut, contre la face inférieure 72 de la bague d'appui 71, la face périphérique intérieure 116 prolonge la face périphérique intérieure 69, vers le bas, selon un même cône géométrique.

La face 116 s'étend vers le bas jusqu'à présenter un diamètre identique à celui du rodoir 4 et se raccorde à ce niveau à une face périphérique intérieure 117 qui définit le trou 114 de la face périphérique intérieure 116 jusqu'à la face inférieure 115 du mors 85 et présente une forme cylindrique de révolution autour de l'axe 21 avec un diamètre identique à celui du rodoir 4. On conçoit aisément que les dimensions respectives des faces 116 et 117 soient conditionnées par le diamètre du rodoir 4 à utiliser, lui-même conditionné par certaines caractéristiques géométriques du pignon à roder.

Un homme du métier comprendra aisément que l'engagement progressif de l'outil de rodage 4 de haut en bas à l'intérieur du trou 114 en vue d'effectuer le rodage d'un pignon 7a ou 7b complète l'effet précité de mise en coïncidence rigoureuse de l'axe 21 avec l'axe 5.

Sous le tiroir 75, et plus précisément dans une position longitudinale intermédiaire entre celle que peut occuper la face inférieure 115 d'un mors 85 lorsqu'il repose vers le bas dans un ajour du tiroir 75 et celle de la face 57 de la paroi 61 de la cage 62, sont disposés des moyens porteurs pour présenter successivement, en coaxialité avec l'axe 21, plusieurs pignons 7a ou 7b identiques, destinés à coopérer avec un même mors 85, ou des pignons 7a ou 7b différents, susceptibles de coopérer avec un même mors 85 ou avec des mors tels que 85 différents, eux-mêmes placés successivement en coaxialité avec l'axe 21 grâce au tiroir 75.

On rappellera en premier lieu que le pignon 7a ou 7b concerné par la présente invention comporte un alésage 118a, 118b à roder, délimité par une face périphérique intérieure 119a, 119b cylindrique de révolution autour d'un axe que l'on place en coïncidence avec l'axe longitudinal 21 et l'axe de rodage 5 pour effectuer son rodage, avec un diamètre qui détermine celui de l'outil de rodage 4 et, dans le cas d'un dispositif selon l'invention, celui de la face périphérique intérieure 117 du trou 114 du mors 85 utilisé, ces deux derniers diamètres étant choisis sensiblement identiques à celui de la face périphérique intérieure 119a, 119b du pignon 7a, 7b à roder.

Si l'on se réfère à une position, illustrée à la figure 1, dans laquelle l'axe non référencé de la face périphérique intérieure 119a, 119b de l'alésage 118a, 118b à roder coïncide avec l'axe 21 du support 20, chaque pignon 7a, 7b présente en outre une face supérieure 120a, 120b et une face inférieure 121a, 121b, l'une et l'autre transversales, annulaires de révolution autour de l'axe 21 au moins quant à leur forme générale, dans lesquelles l'alésage 118a, 118b débouche respectivement vers le haut et vers le bas par sa face périphérique intérieure 119a, 119b.

Au moins dans une zone centrale jouxtant directement le raccordement de la face périphérique intérieure 119a, 119b, la face supérieure 120a, 120b du pignon 7a, 7b présente une forme générale plane, perpendiculaire à l'axe 21, à laquelle est spécifiquement adaptée la forme de la face inférieure 115 du mors 85 de telle sorte que ces faces puissent être placées en appui mutuel, à plat, avec coaxialité de l'alésage 118a, 118b avec le trou 114 du mors 85, lui-même placé de telle sorte que son axe coïncide avec l'axe longitudinal 21 du support 20.

De même, la face inférieure 121a, 121b présente au moins dans une zone centrale jouxtant directement son raccordement avec la face périphérique intérieure 119a, 119b et le cas échéant, comme il est illustré, sur l'intégralité de son étendue radiale en référence à l'axe 21, une forme plane, perpendiculaire à cet axe, en fonction de laquelle sont conçus ou adaptés les moyens porteurs qui vont être décrits à présent.

Ces moyens porteurs comportent un tiroir transversal 122 longitudinalement interposé entre le tiroir 75 et la paroi 61, à un niveau tel que, lorsqu'il porte un pignon 7a ou 7b dans des conditions qui seront décrites ultérieurement, la face supérieure 120a ou 120b de ce pignon respecte vis-à-vis de la face inférieure 115 du mors 85 un jeu longitudinal 123.

Le tiroir 122 est notamment délimité par une face supérieure 124 et une face inférieure 125 l'une et l'autre planes, et perpendiculaires à l'axe 21 et respectivement symétriques par rapport au plan 39 considéré comme lié au support 20. Dans le sens d'un éloignement par rapport à ce plan 39, respectivement de part et d'autre de celui-ci, elles se raccordent à un biseau latéral 126, les deux biseaux latéraux 126 étant mutuellement symétriques par rapport au plan 39 et orientés suivant une direction 127 située dans ce plan 39 et perpendiculaire à l'axe 21. Suivant cette direction 127, les deux faces 124, 125 ainsi que les biseaux 126 se raccordent à une face extrême respective 128 plane, perpendiculaire au plan 39 et symétrique par rapport à celui-ci.

Perpendiculairement au plan 39, les deux biseaux latéraux 126 sont écartés mutuellement d'une distance inférieure à la distance séparant perpendiculairement au plan 39 les faces 66 des parois latérales 63 du support 20, lesquelles faces 66 sont placées en regard des biseaux 126 dans le sens d'un éloignement par rapport au plan 39.

Le tiroir 122 est ainsi engagé librement entre les parois latérales 63 du support 20 et il est porté et guidé en translation suivant la direction 127 par rapport à celui-ci, sans autre possibilité de déplacement relatif, au moyen de galets plus particulièrement visibles aux figures 3 et 4, lesquels galets coopèrent à cet effet avec les deux biseaux 126.

Plus précisément, respectivement de part et d'autre de chaque paroi 63 suivant la direction 127, le support 20 porte de façon solidaire, par l'intermédiaire d'une console 129 solidarisée avec la paroi 63 considérée, un tourillon 130 d'axe 131 parallèle à l'axe 21. Les tourillons 130 sont ainsi au nombre de quatre, dont deux sont disposés d'un côté du support 20 en référence à la direction 127, respectivement face à l'un et l'autre des biseaux 126 et dont les deux autres sont disposés de l'autre côté du support 20 en référence à la direction 127, respectivement en regard de l'un et l'autre des biseaux 126. Les deux tourillons 130 situés d'un même côté du support 20 en référence à la direction 127 sont mutuellement symétriques par rapport au plan 39 et deux tourillons jouxtant la même paroi 63 du support 20 sont mutuellement symétriques par rapport à un plan perpendiculaire à ce plan 39 et incluant l'axe 21, un tel plan se confondant avec le plan 37 dans la position illustrée aux figures dans laquelle l'axe 21 coïncide avec l'axe 5.

Chaque tourillon 130 porte en rotation autour de son axe 131, sans autre possibilité de déplacement relatif, un galet 132, les galets 132 étant mutuellement identiques et respectant les deux symétries précitées. Chacun de ces galets 132 présente une forme annulaire de révolution autour de l'axe respectif 131 et, notamment, présente une gorge 133 annulaire de révolution autour de cet axe et présentant une section complémentaire de celle d'un biseau 126 respectif de telle sorte que chaque biseau 126 soit engagé dans les gorges 133 des deux galets 132 situés du même côté que lui du plan 39, ce qui assure la retenue du tiroir 122 en direction verticale ainsi que suivant des directions perpendiculaires au plan 39 et le guidage du tiroir 122 en translation suivant la direction 127.

Pour recevoir de façon amovible plusieurs pignons 7a, 7b à roder, le tiroir 122 présente des dispositions voisines de celles que le tiroir 75 présente pour recevoir de façon amovible plusieurs mors tels que 85.

Plus précisément, suivant plusieurs axes, par exemple deux axes 134a, 134b situés dans le plan 39 et perpendiculaires aux faces 124 et 125, c'est-à-dire susceptibles d'être placés en coïncidence avec l'axe 21 par translation du tiroir 122 entre les galets 132, le tiroir 122 est percé de part en part d'un ajour respectif 135a, 135b, présentant une forme de révolution autour de l'axe respectif 134a, 134b.

Chaque ajour 135a, 135b est délimité, dans une zone se raccordant à la face supérieure 124 du tiroir 122, par une face périphérique intérieure 136a, 136b cylindrique de révolution autour de l'axe respectif 134a, 134b avec un diamètre supérieur au diamètre maximal de la face inférieure 121a, 121b de tout pignon 7a, 7b susceptible d'être rodé au moyen du dispositif. Dans une zone se raccordant à la face inférieure 125 du tiroir 122, chaque ajour 135a, 135b est délimité par une autre face périphérique intérieure 137a, 137b également cylindrique de révolution autour de l'axe respectif 134a, 134b mais présentant un diamètre inférieur à celui de la face périphérique intérieure 136a, 136b mais supérieur à celui de la face périphérique intérieure 119a, 119b de tout pignon 7a, 7b susceptible d'être rodé au moyen du dispositif. Les faces périphériques intérieures 136a et 137a, 136b et 137b de chaque ajour 135a, 135b sont raccordées mutuellement par une face annulaire plane 138a, 138b, de révolution autour de l'axe respectif 134a, 134b auquel elle est perpendiculaire, en définissant ainsi un épaulement tourné vers le haut, à l'intérieur de chaque ajour 135a, 135b.

Chaque ajour 135a, 135b peut ainsi recevoir coaxialement, et retenir transversalement et longitudinalement vers le bas mais sans retenir longitudinalement vers le haut, un pignon respectif 7a ou 7b qu'un coulissement approprié du tiroir 122 suivant la direction 127, par rapport au support 20, permet d'amener coaxialement à l'axe 21, à volonté.

A cet effet, on peut pousser le tiroir 122 manuellement comme le tiroir 75 ou, comme c'est le cas dans l'exemple illustré, prévoir des moyens moteurs commandés tels qu'un vérin 139 monté sur l'une des consoles 129, disposé fonctionnellement suivant la direction 127 et alimenté en fluide sous pression, de façon commandée, à partir d'une source 140 d'un tel fluide.

De préférence, pour offrir une plus grande possibilité d'adaptation à des pignons 7a, 7b de géométrie différente, notamment au niveau de leur face inférieure 121a, 121b et à proximité de celle-ci, les ajours 135a, 135b du tiroir 122 sont mutuellement identiques et ne reçoivent pas directement les pignons 7a, 7b, qu'ils reçoivent par l'intermédiaire d'une bague ou cale interchangeable, spécifiquement adaptée au positionnement d'un pignon 7a ou 7b de géométrie déterminée.

Ainsi, dans l'exemple illustré, chacun des ajours 135a, 135b reçoit par emboîtement de haut en bas, sans jeu, dans sa face périphérique intérieure 136a, 136b une cale annulaire respective 141a, 141b, de révolution autour de l'axe respectif 134a, 134b et reposant à plat sur la face transversale respective 138a, 138b de l'ajour.

A cet effet, chaque cale 141a, 141b, considérée ainsi positionnée dans l'ajour respectif 135a, 135b, est délimitée dans le sens d'un éloignement par rapport à l'axe respectif 134a, 134b par une face périphérique extérieure 142a, 142b cylindrique de révolution autour de cet axe avec un diamètre égal à celui de la face périphérique intérieure 136a, 136b de l'ajour, et vers le bas par une face annulaire, plane 143a, 143b, de révolution autour de l'axe respectif 134a, 134b auquel elle est perpendiculaire, pour reposer à plat sur la face 138a, 138b de l'ajour, de haut en bas. Le contact mutuel entre les faces 142a et 136a, d'une part, 142b et 136b, d'autre part, est un contact de guidage au coulissement relatif parallèlement à l'axe 134a, 134b.

Vers cet axe, la cale 141a, 141b est délimitée à proximité de sa face inférieure 143a, 143b par une face périphérique intérieure 144a, 144b cylindrique de révolution autour de l'axe 134a, 134b avec un diamètre au plus égal à celui de la face périphérique intérieure 137a, 137b de l'ajour, et plus précisément intermédiaire entre les diamètres respectivement maximal et minimal de la face inférieure 121a, 121b du pignon 7a, 7b à recevoir.

Vers le haut, cette face 144a, 144b se raccorde à une face supérieure 145a, 145b annulaire, plane, de révolution autour de l'axe 134a, 134b de l'ajour correspondant, laquelle face 145a, 145b est destinée à servir d'appui, à plat, à la face inférieure 121b 121a, du pignon 7a, 7b.

Dans le sens d'un éloignement par rapport à l'axe 134a, 134b de l'ajour correspondant, la face annulaire plane 145a, 145b se raccorde à une face périphérique intérieure 146a, 146b cylindrique de révolution autour de l'axe 134a, 134b de l'ajour respectif, avec un diamètre sensiblement égal au diamètre que le pignon 7a, 7b à recevoir présente extérieurement à proximité immédiate de sa face inférieure 121a, 121b, de façon à assurer un calage de ce pignon 7a, 7b suivant toute direction perpendiculaire à l'axe 134a, 134b de l'ajour respectif, c'est-à-dire pour assurer une coaxialité de ce pignon avec l'ajour. Vers le haut, à un niveau intermédiaire entre celui de la face 145a, 145b et celui de la face supérieure 124 du tiroir 122, la face 146a, 146b se raccorde à une face supérieure 147a, 147b annulaire, plane, de révolution autour de l'axe 134a, 134b et se raccordant à la face périphérique extérieure 142a, 142b dans le sens d'un éloignement par rapport à cet axe.

Un homme du métier comprendra aisément que le fonctionnement commandé du vérin 139 permette, dans ces conditions, de placer alternativement en coaxialité avec le mors 85 convenablement choisi et avec le trou 68 du support 20 l'un ou l'autre des pignons 7a, 7b pour assurer le rodage de sa face périphérique intérieure 119a, 119b au moyen du rodoir 4.

Préalablement à ce rodage, des moyens de plaquage 148 portés par le support 20 en dessous du tiroir 122 permettent d'immobiliser le pignon concerné 7a ou 7b, dans une position dans laquelle son alésage 118a, 118b présente une symétrie de rotation autour de l'axe 21, par appui du pignon 7a ou 7b vers le haut, par sa face supérieure 120a, 120b, contre la face inférieure 115 du mors 85 lui-même appliqué à plat par sa face supérieure 112 contre la face inférieure 72 de la bague d'appui 71, dans une relation de coaxialité du trou 114 avec le trou 68 et l'alésage 118a, 118b, dans des conditions propres à empêcher, notamment par friction, toute rotation du pignon 7a, 7b autour de l'axe 21 par rapport au support 20 et toute translation du pignon 7a, 7b transversalement à cet axe par rapport au support 20.

A cet effet, les moyens de plaquage 148 constituent un vérin susceptible d'être alimenté de façon commandée à partir de la source de fluide sous pression 140 et disposé longitudinalement.

Plus précisément, la partie du support 20 logée à l'intérieur de la cavité 9 constitue dans ses zones les plus proches de l'axe 21 un corps 149 pour un tel vérin, qui comporte par ailleurs une tige 150 traversant le corps 149 de part en part suivant l'axe 21 et guidée au coulissement suivant cet axe par rapport au corps 149.

A cet effet, la tige 150, de forme générale tubulaire, de révolution autour de l'axe 21, est délimitée dans le sens d'un éloignement par rapport à celui-ci par deux faces périphériques extérieures 151, 152 cylindriques de révolution autour de l'axe 21 avec un diamètre identique, égal à celui des faces périphériques intérieures 51 et 55 du support avec lesquelles ces faces 151, 152 sont placées respectivement en contact de guidage au coulissement relatif parallèlement à l'axe 21 et vis-à-vis desquelles une étanchéité est assurée respectivement par le joint 50 et par le joint 56.

La face 151, définissant une partie longitudinalement inférieure de la tige 150, et la face 152, définissant une partie longitudinalement supérieure de cette tige, se raccordent respectivement vers le bas et vers le haut à une face annulaire, plane, de révolution autour de l'axe 21, à savoir une face inférieure 153 et une face supérieure 154, lesquelles se raccordent dans le sens d'un rapprochement vis-à-vis de l'axe 21 à une face périphérique intérieure 155 cylindrique de révolution autour de cet axe et présentant un diamètre au moins égal à celui du rodoir, en définissant ainsi à l'intérieur de la tige 150 un alésage longitudinal 156 de passage de ce rodoir.

Les deux faces périphériques extérieures 151 et 152 présentent approximativement la même dimension longitudinale et sont raccordées mutuellement par une collerette 157 annulaire de révolution autour de l'axe 21 et formant une saillie dans le sens d'un éloignement par rapport à celui-ci, sur les faces 151 et 152, entre les faces 52 et 54 du support 20.

Plus précisément, la collerette 157 est délimitée dans le sens d'un éloignement par rapport à l'axe 21 par une face périphérique extérieure 158 cylindrique de révolution autour de cet axe avec un diamètre sensiblement égal à celui de la face périphérique intérieure 53 du support 20, avec laquelle elle est placée en contact glissant de guidage au coulissement relatif parallèlement à l'axe 21 ; une étanchéité est assurée entre les faces 158 et 53 au moyen d'un joint d'étanchéité 159, annulaire de révolution autour de l'axe 21 et logé dans une gorge présentant également cette forme, aménagée dans la face 158.

Cette face 158 se raccorde aux faces 151 et 152 par un épaulement respectif 160, 161 annulaire de révolution autour de l'axe 21 et tourné respectivement vers le bas ou vers le haut, afin de pouvoir venir buter respectivement vers le bas sur la face 52 ou vers le haut sur la face 54.

La dimension longitudinale de la tige 150 entre les épaulements 160 et 161 est inférieure à la distance longitudinale séparant mutuellement les faces 52 et 54 de façon à autoriser un coulissement longitudinal de la tige 150 à l'intérieur du corps de vérin 149 entre une limite basse, illustrée à la figure 1, dans laquelle l'épaulement inférieur 160 de la tige 150 prend appui vers le bas sur la face 52 du support 20, la face 153 est située au niveau de la semelle 7 et la face 154 est placée en saillie au-dessus de la face 57 du support 20, à l'intérieur de la cage 62, et une position limite haute définie par appui de l'épaulement supérieur 161 contre la face 54 et dans laquelle, de façon non illustrée, la face 153 est située approximativement de niveau avec la face 35 de la rondelle 42 et la face 154 est comparativement plus rapprochée du couvercle 64.

Les deux épaulements 160 et 161 présentent une forme en gradin permettant, même dans ces positions limites, de définir respectivement entre l'épaulement inférieur 160 et la face 52 une chambre inférieure 162 de réception de fluide sous pression en provenance de la source 140, et entre l'épaulement supérieur 161 et la face 54 une chambre supérieure 163 de réception d'un tel fluide, afin de faire à volonté monter ou descendre la tige 150, entre les positions limites précitées, par rapport au corps de vérin 149.

Vers le haut, par sa face 154, la tige 150 porte un mors 165 qui, si l'on se réfère à la position illustrée en trait plein à la figure 1, est intégralement situé sous la face inférieure 125 du tiroir 122 mais auquel la tige 150 peut, lors d'un mouvement longitudinal ascendant par rapport au support 20, imprimer un mouvement ascendant, vers la face inférieure 115 du mors 85, pour successivement traverser longitudinalement l'ajour 135a qui se trouve alors placé coaxialement à l'axe 21 ainsi que la cale correspondant 141a, venir prendre appui vers le haut sous la face 121a ou 121b du pignon 7a, 7b porté par cette cale, lever ce pignon 7a, 7b et l'amener ainsi en contact vers le haut, par sa face supérieure 120a, 120b, avec la face inférieure 115 du mors 85, puis lever également ce dernier jusqu'à ce qu'il prenne appui vers le haut, par sa face supérieure 112, sous la face inférieure 72 de la bague d'appui 71, c'est-à-dire sous le couvercle 64, sans que la tige 150 ait pour autant atteint sa position limite haute, puis maintenir dans la chambre 162 une pression de fluide telle qu'il en résulte l'immobilisation du pignon 7a, 7b et du mors 85, par friction, entre le mors 165 et la bague d'appui 71, dans une position illustrée en trait mixte à la figure 1. Naturellement, la descente de la tige 150, à nouveau, jusqu'à sa position limite basse se traduit par un processus inverse, qui ramène successivement le mors 85 en appui vers le bas sur le tiroir 75 et le pignon 7a, 7b en appui vers le bas sur le tiroir 122 par l'intermédiaire de la cale 141a et libère ainsi ce pignon 7a, 7b.

Pour prendre appui à plat sous la face 121a ou 121b du pignon 7a ou 7b, le mors 165 est délimité vers le haut par une face supérieure 166, annulaire, plane, de révolution autour d'un axe coïncidant avec l'axe 21 dans la position illustrée à la figure 1, et se raccordant dans le sens d'un rapprochement vis-à-vis de cet axe 21 à une face périphérique intérieure 167 cylindrique de révolution autour de cet axe avec un diamètre identique à celui de la face périphérique intérieure 155 de la tige 150, de façon à délimiter un trou 168 traversant longitudinalement le mors 165 de part en part.

Dans le sens d'un éloignement par rapport à l'axe 21, la face 166 se raccorde, par l'intermédiaire d'un décrochement 169 annulaire de révolution autour de l'axe 21, à une face périphérique extérieure 170 cylindrique de révolution autour de cet axe avec un diamètre inférieur à celui de la face périphérique intérieure 144a, 144b de n'importe quelle cale 141a, 141b compatible avec les pignons 7a, 7b susceptibles d'être rodés au moyen du dispositif, de façon à permettre au mors 165 de traverser longitudinalement n'importe laquelle de ces cales 141a, 141b pour venir en appui vers le haut, par sa face 166, contre la face inférieure 121a, 121b du pignon 7a, 7b.

La face périphérique extérieure 170 présente une dimension longitudinale compatible avec le fonctionnement précité de serrage d'un pignon 7a, 7b.

Vers le bas, la face 170 se raccorde par un épaulement 171 annulaire, plan, de révolution autour de l'axe 21, à une face périphérique extérieure 172 cylindrique de révolution autour de l'axe 21 avec un diamètre supérieur à celui de la face 170 de même qu'à celui de la face 152 de la tige 150.

Vers le bas, cette face périphérique extérieure 172 s'étend jusqu'à une face inférieure 173 annulaire, plane de révolution autour de l'axe 21 et se raccordant elle-même, dans le sens d'un rapprochement vis-à-vis de cet axe, à une face périphérique intérieure 174 cylindrique de révolution autour de cet axe avec un diamètre intermédiaire entre les diamètres respectifs des faces 172 et 152.

Vers le haut, cette face périphérique intérieure 174 se raccorde à une face 175 annulaire, plane, de révolution autour de l'axe 21, tournée vers le bas et se raccordant dans le sens d'un rapprochement par rapport à cet axe 21 à la face périphérique intérieure 167 du mors 165.

Par sa face inférieure 175, placée longitudinalement en regard de la face supérieure 154 de la tige 150, et sa face 174, le mors 165 s'emboîte sur la face supérieure 154 de la tige 150 et sur la zone, adjacente à cette face 154, de la face 152 de cette tige 150 par l'intermédiaire d'une rondelle 176 d'un matériau présentant l'élasticité du caoutchouc, et notamment élastiquement flexible transversalement, permettant une inclinaison limitée du mors 165 par rapport à la position précitée de stricte coaxialité avec l'axe 21, c'est-à-dire permettant une légère inclinaison de la face 166 par rapport à une stricte perpendicularité à l'axe 21, afin de permettre un appui de la face 166 à plat contre la face inférieure 121a, 121b du pignon 7a, 7b lui-même en appui vers le haut par sa face supérieure 120a, 120b contre la face inférieure 115 du mors 85 lui-même en appui vers le haut par sa face supérieure 112 sur la face inférieure 72 de la bague d'appui 71 même lorsque la face inférieure 121a, 121b du pignon 7a, 7b n'est pas rigoureusement parallèle à la face supérieure 120a, 120b de celui-ci, dans la limite des tolérances généralement admissibles à cet égard.

Pour permettre le cas échéant le passage du rodoir 4, la rondelle 76 est percée suivant l'axe 21 d'un trou traversant 177 délimité par une face périphérique intérieure 188 cylindrique de révolution autour de l'axe 21 en l'absence de déformation de la rondelle 176, avec un diamètre identique à celui des faces périphériques intérieures 167 et 155 du mors 165 et de la tige 150.

La rondelle 176 peut être solidarisée par tout moyen, et par exemple par collage, avec le mors 165 et avec la tige 150, étant à noter que le montage de la tige 150 qui vient d'être décrit ainsi que le caractère élastique de la rondelle 176 n'assurent pas une immobilisation du mors 165 à l'encontre d'une rotation autour de l'axe 21 par rapport au support 20, alors qu'une telle immobilisation est utile pour immobiliser le pignon 7a, 7b, par serrage, à l'encontre d'une telle rotation.

A cet égard, on a prévu des moyens de coopération directe entre le mors 165 et le support 20, compatibles avec une éventuelle inclinaison du mors 165 par rapport à sa position de stricte coaxialité avec l'axe 21, sous une forme comportant un doigt 178 porté solidairement par le mors 165 et formant une saillie dans le sens d'un éloignement par rapport à l'axe de celui-ci, confondu avec l'axe 21 dans la position illustrée à la figure 1, suivant un axe 180 perpendiculaire à cet axe du mors 165.

Le doigt 178 présente suivant l'axe 180 une dimension telle qu'il traverse de part en part l'une des parois 63 de la cage 62, suivant l'axe 180, par une lumière longitudinale 179 de cette paroi 63.

L'axe 180 est situé dans un plan perpendiculaire au plan 39 et incluant l'axe 21, c'est-à-dire un plan confondu avec le plan 37 dans la position illustrée, et la lumière 179 est symétrique par rapport à ce plan.

Dans le sens d'un éloignement par rapport à l'axe 180, le doigt 178 est délimité par une face périphérique extérieure 181 présentant un diamètre faible par rapport aux dimensions que la paroi 63 présente perpendiculairement au plan précité, perpendiculaire au plan 39 et incluant l'axe 21, et la lumière 179 est notamment délimitée par deux flancs plans 182 parallèles à ce plan, mutuellement symétriques par rapport à celui-ci et mutuellement espacés d'une distance sensiblement égale au diamètre de la face 181. Ainsi, le doigt 178 peut non seulement évoluer longitudinalement à l'intérieur de la lumière 179, le cas échéant avec une prise d'inclinaison par rapport à une rigoureuse perpendicularité à l'axe 21 compte tenu du débattement élastique autorisé par la rondelle 176, mais également tourner sur lui-même autour de l'axe 180 à l'intérieur de la lumière 179.

Respectivement vers le haut et vers le bas, les deux flancs 182 de la lumière 179 sont raccordés mutuellement par deux faces extrêmes 183, 184 concaves, avantageusement hémicylindriques de révolution autour d'un axe respectif non représenté, perpendiculaire à l'axe 21, avec un diamètre sensiblement égal à la distance séparant mutuellement les deux flancs 182. Ces deux faces 183 et 184 sont suffisamment espacées longitudinalement pour autoriser le doigt 178 à accomplir, sans buter contre elle, les mouvements de translation longitudinale accompagnant les mouvements de la tige 150 et du mors 165 entre leur position illustrée en trait plein à la figure 1, dans laquelle un pignon 7a ou 7b placé coaxialement à l'axe 21 est libre de reposer à plat sur la cale 143a du tiroir 122, et la position illustrée en trait mixte d'application du pignon 7a ou 7b vers le haut contre le mors 85 lui-même appliqué vers le haut contre la bague 71 du couvercle 64 du support 20.

Naturellement, bien que le mode de mise en oeuvre de l'invention qui vient d'être décrit soit actuellement préféré, on pourra envisager d'autres modes de mise en oeuvre sans sortir pour autant du cadre de la présente invention, par exemple quant au mode de guidage du support 20 en translation suivant toute direction perpendiculaire aux axes 21 et 5 sans autre possibilité de déplacement relatif, quant au mode de définition d'une face d'appui, vers le haut, des pignons ou autres pièces à roder contre le couvercle 64, le mors interchangeable 85 pouvant notamment être remplacé par un mors fixe, par exemple défini directement par la bague d'appui 71 lorsque les pièces telles que les pignons 7a, 7b présentent sensiblement la même forme vers le couvercle, de même que l'on pourrait prévoir un positionnement manuel direct des pièces telles que les pignons sur le mors 165 porté par la tige 150 du vérin, le tiroir 122 et ses moyens de guidage et d'entraînement étant alors supprimés ; ces exemples ne sont toutefois nullement limitatifs.

## Revendications

1. Dispositif de prise d'une pièce plate (7a, 7b) telle qu'un pignon, pendant une opération de rodage d'un alésage (118a, 118b) de celle-ci selon un axe déterminé (5) de rodage, le dispositif (1) étant destiné à maintenir la pièce (7a, 7b) dans une position telle qu'un axe de l'alésage coïncide au moins approximativement avec l'axe de rodage (5) et comprenant à cet effet:
- un support (20) présentant un axe longitudinal (21) destiné à coïncider au moins approximativement avec l'axe de rodage (5) et un trou longitudinal (68, 114) de passage d'un outil (4) de rodage, disposé suivant l'axe longitudinal (21), ce support (20) présentant une structure symétrique par rapport à un plan déterminé (39) incluant l'axe longitudinal (21), lequel support (20) définit une cage (62) qui, lorsqu'elle est vue suivant une direction transversale (186) dudit plan déterminé (39), est fermée et symétrique par rapport à ce plan (39), alors qu'elle est ouverte de part en part suivant ladite direction transversale (186),
- des moyens (148) pour tenir la pièce (7a, 7b) dans la cage (62),
caractérisé en ce que :
- le support (20) présente une première face transversale (115) d'appui longitudinal dans un sens déterminé pour la pièce (7a, 7b), dans une position dans laquelle l'axe de son alésage (118a, 118b) coïncide au moins approximativement avec l'axe longitudinal (21), le trou longitudinal (68, 114) de passage d'un outil (4) de rodage débouchant dans la première face d'appui (115, ladite première face d'appui (115) étant solidaire d'une partie transversale (64) de la cage (62) ou d'un moyen (85) susceptible de prendre appui dans ledit sens longitudinal contre une partie transversale (64) de la cage (62),
- les moyens (148) pour tenir la pièce (7a, 7b) présentent des moyens (148) de plaquage longitudinal de la pièce (7a, 7b) dans ledit sens longitudinal contre la première face d'appui (115), dans ladite position, ces moyens de plaquage (148) présentant longitudinalement en regard de la première face d'appui (115) une deuxième face transversale (166) d'appui longitudinal contre la pièce (7a, 7b) et longitudinalement en regard du trou (68, 114) du support (20) un trou longitudinal (156, 168, 188) de passage de l'outil de rodage (4), débouchant dans la deuxième face d'appui (166) suivant l'axe longitudinal (21), et étant mobiles longitudinalement, de façon commandée, par rapport au support (20) dans le sens d'un rapprochement vis-à-vis de la première face d'appui (115), pour plaquer longitudinalement la pièce (7a, 7b) contre celle-ci et l'immobiliser par rapport au support (20) dans ladite position, ou dans le sens d'un éloignement vis-à-vis de la première face d'appui (115), pour libérer la pièce (7a, 7b),
- la première face d'appui (115) et les moyens de plaquage (148) sont mutuellement opposés longitudinalement.

2. Dispositif selon la revendication 1, caractérisé en ce qu'il comporte en outre un corps porteur (8) fixe dans toute direction perpendiculaire à l'axe de rodage (5) et des moyens (15, 17, 24, 25, 26, 27, 31, 38, 42, 44, 45, 46, 49) de liaison entre le corps porteur (8) et le support (20), portant lui-même les moyens de plaquage (148), les moyens de liaison (13, 15, 17, 24, 25, 26, 27, 29, 31, 38, 42, 44, 45, 46, 49) étant propres à permettre une coïncidence de l'axe longitudinal (21) avec l'axe de rodage (5) en autorisant un débattement limité de l'axe longitudinal (21) dans toute direction perpendiculaire à l'axe de rodage (5) tout en conservant un parallélisme de l'axe longitudinal (21) avec l'axe de rodage (5) et à immobiliser le support (20) à l'encontre d'une translation longitudinale et d'une rotation autour de l'axe de rodage (5) par rapport au corps porteur (8).

3. Dispositif selon la revendication 2, caractérisé en ce que les moyens de liaison (13, 15, 17, 24, 25, 26, 27, 29, 31, 38, 42, 44, 45, 46, 49) comportent :
- des moyens (15, 17, 24, 25, 26, 27) d'appui du support (20) sur le corps porteur (8) dans les deux sens longitudinaux et de guidage du support (20) en translation par rapport au corps porteur (8) dans toute direction perpendiculaire à l'axe de rodage (5),
- des moyens (13, 29, 31, 38, 42, 44, 45, 46, 49) d'arrêt du support (20) en rotation autour de l'axe de rodage (5) par rapport au corps porteur (8).

4. Dispositif selon la revendication 3, caractérisé en ce que les moyens d'appui (15, 17, 24, 25, 26, 27) comportent deux butées antagonistes, à billes (26, 27).

5. Dispositif selon l'une quelconque des revendications 3 et 4, caractérisé en ce que les moyens d'arrêt (31, 38, 42, 44, 45, 46, 49) comportent deux faces transversales de glissement (29, 13) en vis-à-vis, respectivement du support (20) et du corps porteur (8), une rondelle transversale plate (31) intercalée entre les deux faces transversales de glissement (29, 13) et susceptible de glisser transversalement contre l'une et l'autre, par rapport au support (20) et au corps porteur (8), et des moyens (38, 43, 44, 45, 46, 49) de guidage de la rondelle (31) en translation suivant une première direction déterminée (185) perpendiculaire à l'axe de rodage (5), par rapport au corps porteur (8), et suivant une deuxième direction déterminée (186) perpendiculaire à la première direction déterminée (185) et à l'axe longitudinal (21), par rapport au support (20).

6. Dispositif selon la revendication 5, caractérisé en ce que les moyens (38, 42, 44, 45, 46, 49) de guidage de la rondelle (31) à la translation comportent :
- deux doigts longitudinaux (42) solidaires du corps porteur (8), en saillie sur la face transversale de glissement (13) de celui-ci dans des positions diamétralement opposées en référence à l'axe de rodage (5), suivant la première direction déterminée (185),
- deux doigts longitudinaux (46) solidaires du support (20), en saillie sur la face transversale de glissement (29) de celui-ci dans des positions diamétralement opposées en référence à l'axe longitudinal (21), suivant la deuxième direction déterminée (186),
- une glissière (38) aménagée dans la rondelle (31) suivant la première direction (185) et recevant les deux doigts (42) du corps porteur (8), dans une relation de guidage en translation relative suivant la première direction (185),
- une glissière (45) aménagée dans la rondelle (31) suivant la deuxième direction (186) et recevant les deux doigts (46) du support (20), dans une relation de guidage en translation relative suivant la deuxième direction (186).

7. Dispositif selon la revendication 6, caractérisé en ce que chaque doigt (42, 46) porte, à l'intérieur de la glissière respective (38, 45) un galet (44, 49) tourillonnant autour d'un axe (43, 48) parallèle à l'axe de rodage (5) et à l'axe longitudinal (21).

8. Dispositif selon l'une quelconque des revendications 1 à 7, caractérisé en ce que le support (20) comporte un premier mors (85) d'appui longitudinal de la pièce (7a, 7b), définissant la première face transversale d'appui (115), et des moyens (73, 75, 90) de montage amovible du premier mors (85).

9. Dispositif selon la revendication 8, caractérisé en ce que le support (20) comporte un couvercle transversal (64) définissant ladite structure longitudinalement en regard des moyens de plaquage (148) et en ce que les moyens (73, 75, 90) de montage amovible du premier mors (85) comportent des premiers moyens porteurs (73, 75, 90) pour intercaler successivement, à volonté, longitudinalement entre les moyens de plaquage (148) et le couvercle (64), contre ce dernier, plusieurs premiers mors (85) dont chacun définit une première face d'appui (115).

10. Dispositif selon la revendication 9, caractérisé en ce que les premiers moyens porteurs (73, 75, 90) comportent un premier tiroir transversal (75) longitudinalement interposé entre les moyens de plaquage (148) et le couvercle (64) et présentant une pluralité d'ajours longitudinaux (81a, 81b) de logement pour un premier mors (85) respectif, mutuellement juxtaposés suivant une première direction transversale déterminée (74) dudit plan (39), et des moyens (73) de guidage du premier tiroir (75) en translation suivant cette première direction transversale déterminée (74), par rapport au support (20).

11. Dispositif selon la revendication 10, caractérisé en ce que les premiers moyens porteurs (73, 75, 90) comportent en outre des moyens (90) de verrouillage du premier tiroir (75) à volonté, par rapport au support (20), dans toute position dans laquelle il présente l'un des premiers mors (85) dans une position déterminée dans laquelle le trou longitudinal respectif (114) de passage de l'outil de rodage (4) débouche dans la première face d'appui respective (115) suivant l'axe longitudinal (21).

12. Dispositif selon la revendication 11, caractérisé en ce qu'aux moyens (90) de verrouillage du premier tiroir (75) sont associés des moyens (107) de détection de la position de celui-ci suivant la première direction transversale déterminée (74).

13. Dispositif selon l'une quelconque des revendications 10 à 12, caractérisé en ce que le couvercle (64) constitue une partie supérieure du support (20), en ce que chaque ajour (81a, 81b) de logement est propre à recevoir le premier mors respectif (85) de haut en bas en le laissant libre de se déplacer de bas en haut, et en ce que le couvercle (64), d'une part, et chaque premier mors (85), d'autre part, comportent des moyens (72, 112) d'appui de ce premier mors (85) vers le haut contre le couvercle (64) lorsque ce premier mors (85) occupe une position déterminée dans laquelle le trou longitudinal respectif (114) de passage de l'outil de rodage (4) débouche dans la face d'appui respective (115) suivant l'axe longitudinal (21).

14. Dispositif selon l'une quelconque des revendications 1 à 13, caractérisé en ce que les moyens de plaquage (148) comportent un vérin longitudinal présentant un corps (149) solidaire du support (20) et une tige (150) en saillie longitudinale hors du corps (149), vers la première face d'appui (115).

15. Dispositif selon la revendication 14, caractérisé en ce que les moyens de plaquage (148) comportent un deuxième mors (165) d'appui longitudinal de la tige (150) du vérin contre la pièce (7a, 7b), définissant la deuxième face transversale d'appui (166), des moyens (176), élastiquement flexibles transversalement, de liaison entre le deuxième mors (165) et la tige du vérin (150), pour permettre une inclinaison limitée de la deuxième face transversale d'appui (166) par rapport à la transversalité, et des moyens (178, 179) d'immobilisation du deuxième mors (165) en rotation autour de l'axe longitudinal (21) par rapport au support (20).

16. Dispositif selon la revendication 15, caractérisé en ce que les moyens (178, 179) d'immobilisation du deuxième mors (165) en rotation par rapport au support (20) comportent un doigt (178) en saillie transversale par rapport au deuxième mors (165) et solidaire de celui-ci, et une lumière longitudinale (179) du support (20), recevant le doigt (178) avec possibilité de translation longitudinale relative, de basculement du doigt (178) par rapport à la transversalité et de rotation du doigt (178) sur lui-même.

17. Dispositif selon l'une quelconque des revendications 1 à 16, caractérisé en ce que le support (20) comporte des deuxièmes moyens porteurs (122, 132) pour intercaler successivement, à volonté, longitudinalement entre les moyens de plaquage (148) et la première face d'appui (115), plusieurs pièces (7a, 7b) dans une position telle que l'axe de leur alésage (118a, 118b) coïncide au moins approximativement avec l'axe longitudinal (21).

18. Dispositif selon la revendication 17, caractérisé en ce que les deuxièmes moyens porteurs (122, 132) comportent un deuxième tiroir transversal (122) longitudinalement interposé entre les moyens de plaquage (148) et la première face d'appui (115) et présentant une pluralité d'ajours longitudinaux (135a, 135b) de logement pour une pièce respective (7a, 7b), mutuellement juxtaposés suivant une deuxième direction transversale déterminée (127) dudit plan (39), et des moyens (132) de guidage du deuxième tiroir (122) en translation suivant cette deuxième direction transversale déterminée (127), par rapport au support (20).

19. Dispositif selon la revendication 18, caractérisé en ce que la première face d'appui (115) est située au-dessus des moyens de plaquage (148) et en ce que chaque ajour de logement (135a, 135b) est propre à recevoir la pièce respective (7a, 7b) de haut en bas en la laissant libre de se déplacer de bas en haut.

20. Dispositif selon l'une quelconque des revendications 18 et 19, caractérisé en ce que le deuxième tiroir (122) comporte, dans au moins un ajour de logement (135a, 135b), une cale interchangeable (141a, 141b) de positionnement d'une pièce déterminée (7a, 7b).

## Patentansprüche

1. Vorrichtung für das Ergreifen eines flachen Teils (7a, 7b), wie zum Beispiel eines Ritzels während dem Schneiden einer Zylinderbohrung (118a,118b) in diesem Teil in einer bestimmten Schneidachse (5), wobei die Vorrichtung (1) so konzipiert ist, dass sie das Teil (7a, 7b) in einer Position halten kann, in der eine Achse der Zylinderbohrung zumindest annähernd mit der Schneidachse (5) übereinstimmt, und zu diesem Zweck folgendes aufweist:
- eine Halterung (20) mit einer Längsachse (21), die zumindest annähernd mit der Schneidachse (5) übereinstimmt, sowie eine in der Längsachse (21) angeordnete Längsbohrung (68, 114) für den Durchgang eines Schneidwerkzeugs (4), wobei diese Halterung eine symmetrische Struktur gegenüber einer festgelegten Ebene (39) hat, in der die Längsachse (21) enthalten ist, und diese Halterung (20) einen Käfig (62) bildet, der gesehen in einer Querrichtung (186) der festgelegten Ebene (39) geschlossen ist und symmetrisch zu dieser Ebene (39) liegt, während er in der Querrichtung (186) durchgehend offen ist,
- sowie Mittel (148), um das Teil (7a, 7b) in dem Käfig (62) zu halten,
**dadurch gekennzeichnet, dass**
- die Halterung (20) eine erste Querfläche (115) für die Auflage des Teils (7a, 7b) in Längsrichtung in einer bestimmten Richtung in einer Position aufweist, in der die Achse der Zylinderbohrung (118a, 118b) zumindest annähernd mit der Längsachse (21) übereinstimmt, wobei die Längsbohrung (68, 114) für den Durchgang eines Schneidwerkzeugs (4) in der ersten Auflagefläche (115) mündet, wobei diese erste Auflagefläche (115) mit einem Seitenteil (64) des Käfigs (62) oder mit einem Mittel (85) fest verbunden ist, das in der Längsrichtung an einem Querteil des Käfigs (62) zur Anlage kommen kann,
- die Mittel (148), um das Teil (7a, 7b) zu halten, Mittel (148) für das Anpressen in Längsrichtung des Teils (7a, 7b) in dieser Längsrichtung an diese erste Anlagefläche (115) in dieser Position aufweisen, wobei diese Anpressmittel (148) in Längsrichtung gegenüber der ersten Auflagefläche (115) eine zweite Querfläche (166) für die Längsauflage an dem Teil (7a, 7b) und in Längsrichtung gegenüber der Bohrung (68, 114) der Halterung (20) eine Längsbohrung (156,168,188) für den Durchgang des Schneidwerkzeugs (4) definieren, welche in der zweiten Auflagefläche (166) in der Längsachse (21) mündet, und in Längsrichtung gesteuert gegenüber der Halterung (20) verschoben werden können, um sich der ersten Auflagefläche (115) zu nähern, um das Teil (7a, 7b) in Längsrichtung an diese Auflagefläche anzupressen und es gegenüber der Halterung (20) in dieser Position zu blockieren, oder aber sich von der ersten Auflagefläche (115) zu entfernen, um das Teil (7a, 7b) freizusetzen,
- und dass die erste Auflagefläche (115) und die Anpressmittel (148) in Längsrichtung einander gegenüberliegend angeordnet sind.

2. Vorrichtung nach Anspruch 1,
**dadurch gekennzeichnet, dass**
sie außerdem einen Trägerkörper (8), der in allen Richtungen senkrecht zur Schneidachse (5) befestigt ist, und Mittel (15, 17, 24, 25, 26, 27, 31, 38, 42, 44, 45, 46, 49) für die Verbindung zwischen dem Trägerkörper (8) und der Halterung (20) aufweist, welche ihrerseits Anpressmittel (148) trägt, wobei die Verbindungsmittel (13, 15, 17, 24, 25, 26, 27, 29, 31, 38, 42, 44, 45, 46, 49) so beschaffen sind, dass sie eine Übereinstimmung der Längsachse (21) mit der Schneidachse (5) ermöglichen und einen begrenzten Ausschlag der Längsachse (21) in allen senkrechten Richtungen zur Schneidachse (5) ermöglichen, und dabei die Parallelität zwischen der Längsachse (21) und der Schneidachse (5) erhalten wird, und die Halterung (20) gegen eine Längsverschiebung und eine Drehung um die Schneidachse (5) gegenüber dem Trägerkörper (8) blockieren.

3. Vorrichtung nach Anspruch 2,
**dadurch gekennzeichnet dass**
die Verbindungsmittel (13, 15, 17, 24, 25, 26, 27, 29, 31, 38, 42, 44, 45, 46, 49) folgendes aufweisen:
- Mittel (15, 17, 24, 25, 26, 27) für die Auflage der Halterung (20) an dem Trägerkörper (8) in beiden Längsrichtungen und die seitliche Führung der Halterung (20) gegenüber dem Trägerkörper (8) in allen senkrechten Richtungen zu der Schneidachse (5),
- Mittel (13, 29, 31, 38, 42, 44, 45, 46, 49) für die drehfeste Arretierung um die Schneidachse (5) gegenüber dem Trägerkörper (8).

4. Vorrichtung nach Anspruch 3,
**dadurch gekennzeichnet, dass**
die Auflagemittel (15, 17, 24, 25, 26, 27) zwei entgegenwirkende Kugellager (26, 27) aufweisen.

5. Vorrichtung nach einem der Ansprüche 3 und 4,
**dadurch gekennzeichnet, dass**
die Arretierungsmittel (31, 38, 42, 44, 45, 46, 49) zu zwei quer- und gegenüberliegenden Gleitflächen (29, 13) beziehungsweise der Halterung (20) und dem Trägerkörper (8) gehören, sowie eine flache Unterlegscheibe (31), welche zwischen den beiden querliegenden Gleitflächen (29, 13) angeordnet ist und gegen beide Gleitflächen seitlich gegenüber der Halterung (20) und dem Trägerkörper (8) gleiten kann, und Mittel (38, 43, 44, 45, 46, 49) für die seitliche Führung der Unterlegscheibe (31) in einer ersten festgelegten Richtung (185), die senkrecht zur Schneidachse (5) liegt, gegenüber dem Trägerkörper (8) und in einer zweiten festgelegten Richtung (186), die senkrecht zu der ersten festgelegten Richtung (185) und der Längsachse (21) gegenüber der Halterung (20) liegen, aufweisen.

6. Vorrichtung nach Anspruch 5,
**dadurch gekennzeichnet, dass**
die Mittel (38, 42, 44, 45, 46, 49) für die seitliche Führung der Unterlegscheibe (31) folgendes aufweisen:
- zwei längliche Finger (42), die fest mit dem Trägerkörper (8) verbunden sind und aus dessen querliegender Gleitfläche (13) in Positionen hervorstehen, die diametral gegenüberliegend in Bezug auf die Schneidachse (5) in der ersten festgelegten Richtung (185) angeordnet sind,
- zwei längliche Finger (46), die fest mit der Halterung (20) verbunden sind und aus deren querliegender Gleitfläche (29) in diametral gegenüberliegenden Positionen in Bezug auf die Längsachse (21) in der zweiten festgelegten Richtung (186) hervorstehen,
- eine in die Unterlegscheibe (31) in der ersten Richtung (185) eingebrachte Gleitschiene (38), die die zwei Finger (46) Trägerkörper (8) in einem Führungsverhältnis in der ersten Richtung (185) empfängt,
- eine Gleitschiene (45), die in die Unterlegscheibe (31) in der zweiten Richtung (186) eingebracht ist, und die zwei Finger (46) der Halterung (20) in einem seitlichen Führungsverhältnis in der zweiten Richtung (186) empfängt.

7. Vorrichtung nach Anspruch 6,
**dadurch gekennzeichnet, dass**
jeder Finger (42, 46) an der Innenseite der jeweiligen Gleitschiene (38, 45) einen Rollkörper (44, 49) aufweist, welcher sich um eine Achse (43, 48) drehen kann, die parallel zu der Schneidachse (5) und der Längsachse (21) verläuft.

8. Vorrichtung nach einem der vorausgegangenen Ansprüche 1 bis 7,
**dadurch gekennzeichnet, dass**
die Halterung (20) eine erste Spannbacke (85) für die Längsauflage des Teils (7a, 7b), die die erste querliegende Auflagefläche (115) bildet, und Mittel (73, 75, 90) für die lösliche Montage der ersten Spannbacke (85) aufweist.

9. Vorrichtung nach Anspruch 8,
**dadurch gekennzeichnet, dass**
die Halterung (20) einen Seitendeckel (64) aufweist, welcher diese Struktur in Längsrichtung gegenüber den Anpressmitteln (148) bildet, und dass die Mittel (73, 75, 90) für die lösliche Montage der ersten Spannbacke (85) erste Tragmittel (73, 75, 90) aufweisen, um wahlweise in Längsrichtung zwischen den Anpressmitteln (148) und dem Deckel (64) an diesem mehrere erste Spannbacken (85) vorzusehen, die jeweils eine erste Auflagefläche (115) bilden.

10. Vorrichtung nach Anspruch 9,
**dadurch gekennzeichnet, dass**
die ersten Tragmittel (73, 75, 90) einen ersten Querschieber (75) aufweisen, der in Längsrichtung zwischen den Anpressmitteln (148) und dem Deckel (64) angeordnet ist und eine Vielzahl von Längsschlitzen (81a, 81b) für die Aufnahme einer ersten Spannbacke (85) aufweist, die in einer ersten festgelegten Richtung (74) der Ebene (39) benachbart angeordnet sind, sowie Mittel (73) für die Führung des ersten Schiebers (75) in dieser ersten festgelegten Querrichtung (74) gegenüber der Halterung (20) aufweist.

11. Vorrichtung nach Anspruch 10,
**dadurch gekennzeichnet, dass**
die ersten Tragmittel (73, 75, 90) weiterhin Mittel (90) für die wahlweise Verriegelung des ersten Schiebers (75) gegenüber der Halterung (20) in verschiedenen Positionen aufweisen, in denen er eine der ersten Spannbacken (85) in einer festgelegten Position hält, in der das entsprechende Langloch (114) für den Durchgang des Schneidwerkzeugs (4) entlang der Längsachse (21) in der ersten Auflagefläche (115) mündet.

12. Vorrichtung nach Anspruch 11,
**dadurch gekennzeichnet, dass**
an die Mittel (90) für die Verriegelung des ersten Schiebers (75) Mittel (107) für die Festlegung seiner Position in der ersten festgelegten Querrichtung (74) angeschlossen sind.

13. Vorrichtung nach einem der Ansprüche 10 bis 12,
**dadurch gekennzeichnet, dass**
der Deckel (64) einen oberen Teil der Halterung (20) bildet, und dadurch, dass jeder der Aufnahmeschlitze (81a, 81b) so gestaltet ist, dass die entsprechende erste Spannbacke (85) von oben nach unten aufnehmen können und sie dabei so frei lässt, dass sie sich von unten nach oben bewegen kann, und dadurch, dass der Deckel (64) einerseits und jede erste Spannbacke andererseits Mittel (72, 112) für die Anlage der ersten Spannbacke (85) in oberer Richtung an dem Deckel (64) aufweist, wenn sich die erste Spannbacke (85) in einer bestimmten Position befindet, in der das entsprechende Langloch (114) für den Durchgang des Schneidwerkzeugs (4) in der Längsachse (21) der Auflagefläche (115) mündet.

14. Vorrichtung nach einem der Ansprüche 1 bis 13,
**dadurch gekennzeichnet, dass**
die Anpressmittel (148) einen Längs zylinder aufweisen, der einen mit der Halterung (20) fest verbundenen Körper (149) aufweist, sowie eine Spindel (150), die in Längsrichtung aus dem Körper (149) gegenüber der ersten Auflagefläche (115) hervorsteht.

15. Vorrichtung nach Anspruch 14,
**dadurch gekennzeichnet, dass**
die Anpressmittel (148) eine zweite Spannbacke (165) für die Anlage der Spindel (150) des Zylinders in Längsrichtung an dem Teil (7a, 7b), welche die zweite querliegende Auflagefläche (166) bildet, und in querliegender Richtung elastische Mittel (176) für die Verbindung zwischen der zweiten Spannbacke (165) und der Spindel des Zylinders, um eine begrenzte Neigung der zweiten querliegenden Auflagefläche (166) gegenüber der Querrichtung zu ermöglichen, und Mittel (178, 179) für die drehfeste Blockierung der zweiten Spannbacke (165) um die Längsachse (21) gegenüber der Halterung (20) aufweisen.

16. Vorrichtung nach Anspruch 15,
**dadurch gekennzeichnet, dass**
die Mittel (178, 179) für die drehfeste Blockierung der zweiten Spannbacke (165) gegenüber der Halterung (20) einen Finger (178), der quer aus der zweiten Spannbacke (165) hervorsteht und mit dieser fest verbunden ist, sowie ein Langloch (179) in der Halterung (20) aufweist, in die der Finger (178) mit der Möglichkeit einer relativen Längsverschiebung einer Neigung des Fingers (178) gegenüber der Querrichtung und einer Drehung des Fingers (178) um seine eigene Achse eingesetzt ist.

17. Vorrichtung nach einem der Ansprüche 1 bis 16,
**dadurch gekennzeichnet, dass**
die Halterung (20) zweite Tragmittel (122, 132) aufweist, um wahlweise in Längsrichtung zwischen den Anpressmitteln (148) und der ersten Auflagefläche (115) mehrere Teile (7a, 7b) in einer Position anzuordnen, in der die Achse ihrer Zylinderbohrung (118a, 118b) mindestens annähernd mit der Längsachse (21) übereinstimmt.

18. Vorrichtung nach Anspruch 17,
**dadurch gekennzeichnet, dass**
die zweiten Tragmittel (122, 132) einen zweiten Querschieber (122), welcher in Längsrichtung zwischen den Anpressmitteln (148) und der ersten Auflagefläche (115) angeordnet ist und eine Vielzahl von Längsschlitzen (135a, 135b) für die Aufnahme eines entsprechenden Teils (7a, 7b) aufweist, die jeweils benachbart in einer zweiten festgelegten Querrichtung (127) der Ebene (39) angeordnet sind, und Mittel (132) für die seitliche Führung des zweiten Schiebers (122) in dieser festgelegten Querrichtung (127) gegenüber der Halterung (20) vorgesehen sind, aufweisen.

19. Vorrichtung nach Anspruch 18,
**dadurch gekennzeichnet, dass**
die erste Auflagefläche (115) über den Anpressmitteln (148) angeordnet ist, und dass jeder Aufnahmeschlitz (135a, 135b) so gestaltet ist, dass er das jeweilige Teil (7a) von unten nach oben aufnehmen kann, indem es sich von oben nach unten frei bewegen kann.

20. Vorrichtung nach einem der Ansprüche 18 und 19,
**dadurch gekennzeichnet, dass**
der zweite Schieber (122) mindestens in einem der Aufnahmeschlitze (135a, 135b) einen auswechselbaren Positionierkeil (141a, 141b) für die Positionierung eines bestimmten Teils (7a, 7ab) aufweist.

## Claims

1. Device for holding a flat workpiece (7a, 7b), such as a gear wheel, during an operation of honing a bore (118a, 118b) thereof along a determined honing axis (5), the device (1) being intended to keep the workpiece (7a, 7b) in a position such that an axis of the bore coincides at least approximately with the honing axis (5), and for this purpose comprising:
- a support (20) which has a longitudinal axis (21) intended to coincide at least approximately with the honing axis (4) and a longitudinal hole (68, 114) for the passage of a honing tool (4), arranged along the longitudinal axis (21), this support (20) having a structure that is symmetric with respect to a given plane (39) including the longitudinal axis (21), which support (20) defines a cage (62) which, when viewed in a transverse direction (186) of the said given plane (39), is closed and symmetric with respect to this plane (39), whereas it is open all the way through in the said transverse direction (186),
- means (148) for holding the workpiece (7a, 7b) in the cage (62),
characterized in that:
- the support (20) has a first transverse face (115) against which the workpiece (7a, 7b) can bear longitudinally in a given direction, in a position in which the axis of the bore (118a, 118b) of the workpiece at least approximately coincides with the longitudinal axis (21), the longitudinal hole (68, 114) for the passage of a honing tool (4) opening into the first bearing face (115), the said first bearing face (115) being integral with a transverse part (64) of the cage (62) or of a means (85) capable of bearing, in the said longitudinal direction, against a transverse part (64) of the cage (62),
- the means (148) for holding the workpiece (7a, 7b) have means (148) for longitudinally pressing the workpiece (7a, 7b) in the said longitudinal direction against the first bearing face (115) in the said position, these pressing means (148) having, longitudinally facing the first bearing face (115), a second transverse face (166) for bearing longitudinally against the workpiece (7a, 7b) and longitudinally opposite the hole (68, 114) of the support (20) a longitudinal hole (156, 168, 188) for the passage of the honing tool (4), opening into the second bearing face (166) along the longitudinal axis (21), and being able to move longitudinally, in a controlled fashion, with respect to the support (20) in a direction towards the first bearing face (115), so as to press the workpiece (7a, 7b) longitudinally against this face and immobilize it in the said position with respect to the support (20), or in a direction away from the first bearing face (115) so as to release the workpiece (7a, 7b),
- the first bearing face (115) and the pressing means (148) are longitudinally mutually opposed.

2. Device according to Claim 1, characterized in that it further comprises a carrier body (8) which is fixed in all directions perpendicular to the honing axis (5) and means (15, 17, 24, 25, 26, 27, 31, 38, 42, 44, 45, 46, 49) of connection between the carrier body (8) and the support (20), itself bearing the pressing means (148), the connecting means (13, 15, 17, 24, 25, 26, 27, 29, 31, 38, 42, 44, 45, 46, 49) being capable of allowing the longitudinal axis (21) to coincide with the honing axis (5) by allowing a limited deflection of the longitudinal axis (21) in any direction perpendicular to the honing axis (5) while maintaining parallelism between the longitudinal axis (21) and the honing axis (5), and of immobilizing the support (20) against longitudinal translation and rotation about the honing axis (5) with respect to the carrier body (8).

3. Device according to Claim 2, characterized in that the connecting means (13, 15, 17, 24, 25, 26, 27, 29, 31, 38, 42, 44, 45, 46, 49) comprise:
- means (15, 17, 24, 25, 26, 27) whereby the support (20) can bear on the carrier body (8) in the two longitudinal directions and for guiding the support (20) in translation with respect to the carrier body (8) in any direction perpendicular to the honing axis (5),
- means (13, 29, 31, 38, 42, 44, 45, 46, 49) for stopping the rotation of the support (20) about the honing axis (5) with respect to the carrier body (8).

4. Device according to Claim 3, characterized in that the bearing means (15, 17, 24, 25, 26, 27) comprise two opposing thrust ball bearings (26, 27).

5. Device according to either one of Claims 3 and 4, characterized in that the stop means (31, 38, 42, 44, 45, 46, 49) comprise two transverse slip faces (29, 13) facing each other and belonging respectively to the support (20) and to the carrier body (8), a flat transverse washer (31) inserted between the two transverse slip faces (29, 13) and capable of slipping transversely against both of them with respect to the support (20) and to the carrier body (8), and means (38, 43, 44, 45, 46, 49) for guiding the washer (31) in translation in a first given direction (185) perpendicular to the honing axis (5) with respect to the carrier body (8), and in a second given direction (186) perpendicular to the first given direction (185) and to the longitudinal axis (21) with respect to the support (20).

6. Device according to Claim 5, characterized in that the means (38, 42, 44, 45, 46, 49) of guiding the washer (31) in translation comprise:
- two longitudinal fingers (42) secured to the carrier body (8), projecting from the transverse slip face (13) thereof in diametrically opposed positions with reference to the honing axis (5), in the first given direction (185),
- two longitudinal fingers (46) secured to the support (20), projecting from the transverse slip face (29) thereof in diametrically opposed positions with reference to the longitudinal axis (21), in the second given direction (186),
- a slideway (38) made in the washer (31) in the first direction (185) and accommodating the two fingers (42) of the carrier body (8), in a relationship of relative translational guidance in the first direction (185),
- a slideway (45) formed in the washer (31) in the second direction (186) and accommodating the two fingers (46) of the support (20), in a relationship of relative translational guidance in the second direction (186).

7. Device according to Claim 6, characterized in that each finger (42, 46) bears, inside the respective slideway (38, 45), a roller (44, 49) pivoting about an axis (43, 48) parallel to the honing axis (5) and to the longitudinal axis (21).

8. Device according to any one of Claims 1 to 7, characterized in that the support (20) comprises a first jaw (85) for bearing longitudinally against the workpiece (7a, 7b) defining the first transverse bearing face (115), and means (73, 75, 90) for the removable mounting of the first jaw (85).

9. Device according to Claim 8, characterized in that the support (20) has a transverse cover (64) defining the said structure longitudinally facing the pressing means (148) and in that the means (73, 75, 90) for the removable mounting of the first jaw (85) comprise first carrier means (73, 75, 90) for inserting a number of first jaws (85), each of which defines a first bearing face (115), in turn and as desired longitudinally between the pressing means (148) and the cover (64) and against the latter.

10. Device according to Claim 9, characterized in that the first carrier means (73, 75, 90) comprise a first transverse slide (75) inserted longitudinally between the pressing means (148) and the cover (64) and having a number of longitudinal openings (81a, 81b) for housing a first respective jaw (85), these being mutually juxtaposed in a first given transverse direction (74) of the said plane (39), and means (73) for guiding the first slide (75) in translation in this first given transverse direction (74) with respect to the support (20).

11. Device according to Claim 10, characterized in that the first carrier means (73, 75, 90) further comprise means (90) of locking the first slide (75) as desired, with respect to the support (20), in any position in which it offers one of the first jaws (85) in a given position in which the respective longitudinal hole (114) for the passage of the honing tool (4) opens into the first respective bearing face (115) along the longitudinal axis (21).

12. Device according to Claim 11, characterized in that associated with the means (90) of locking the first slide (75) are means (107) for detecting the position of this slide in the first given transverse direction (74).

13. Device according to any one of Claims 10 to 12, characterized in that the cover (64) constitutes an upper part of the support (20), in that each housing opening (81a, 81b) is capable of accommodating the first respective jaw (85) downwards, leaving it free to move upwards, and in that the cover (64), on the one hand, and each first jaw (85), on the other hand, comprise means (72, 112) for pushing this first jaw (85) upwards against the cover (64) when this first jaw (85) occupies a given position in which the respective longitudinal hole (114) for the passage of the honing tool (4) opens into the respective bearing face (115) along the longitudinal axis (21).

14. Device according to any one of Claims 1 to 13, characterized in that the pressing means (148) comprise a longitudinal ram which has a body (149) secured to the support (20) and a rod (150) protruding longitudinally out of the body (149) towards the first bearing face (115).

15. Device according to Claim 14, characterized in that the pressing means (148) comprise a second jaw (165) to cause the rod (150) of the ram to bear longitudinally against the workpiece (7a, 7b), defining the second transverse bearing face (166), elastically transversely flexible means (176) of connection between the second jaw (165) and the rod of the ram (150), to allow a limited inclination of the second transverse bearing face (166) with respect to the transversality and means (178, 179) for immobilizing the second jaw (165) in terms of rotation about the longitudinal axis (21) with respect to the support (20).

16. Device according to Claim 15, characterized in that the means (178, 179) of immobilizing the second jaw (165) in terms of rotation with respect to the support (20) comprise a finger (178) protruding transversely with respect to the second jaw (165) and secured thereto, and a longitudinal slot (179) of the support (20), accommodating the finger (178) with the possibility of relative longitudinal translation, of the tilting of the finger (178) with respect to the transversality and of the finger (178) rotating on itself.

17. Device according to any one of Claims 1 to 16, characterized in that the support (20) comprises second carrier means (122, 132) for inserting a number of workpieces (7a, 7b) in turn and as desired longitudinally between the pressing means (148) and the first bearing face (115) in a position such that the axis of their bore (118a, 118b) at least approximately coincides with the longitudinal axis (21).

18. Device according to Claim 17, characterized in that the second carrier means (122, 132) comprise a second transverse slide (122) inserted longitudinally between the pressing means (148) and the first bearing face (115) and having a number of longitudinal openings (135a, 135b) for housing a respective workpiece (7a, 7b), these being mutually juxtaposed in a second given transverse direction (127) of the said plane (39), and means (132) of guiding the second slide (122) in translation in this second given transverse direction (127) with respect to the support (20).

19. Device according to Claim 18, characterized in that the first bearing face (115) is located above the pressing means (148) and in that each housing opening (135a, 135b) is capable of accommodating the respective workpiece (7a, 7b) downwards, leaving it free to move upwards.

20. Device according to either one of Claims 18 and 19, characterized in that the second slide (122) comprises, in at least one housing opening (135a, 135b), an interchangeable packing piece (141a, 141b) for positioning a given workpiece (7a, 7b).
